# EUROPEAN PATENT SPECIFICATION

(11) **EP 0 574 071 B1**
(45) Date of publication and mention of the grant of the patent: **01.03.2000**
(21) Application number: 93201568.8
(22) Date of filing: 02.06.1993
(51) Int. Cl.: G11B 27/038, G11B 27/032, G11B 20/18

(54) **System for recording and reproducing a digital signal on/from a re-recordable record carrier**
System zum Aufnehmen und Wiedergeben eines digitalen Signals auf/von einem wiederaufzeichenbaren Aufzeichnungsträger
Système pour l'enregistrement et la reproduction d'un signal numérique sur un support d'enregistrement réenregistrable

(30) Priority: 09.06.1992 EP 92201653
(43) Date of publication of application: 15.12.1993
(73) Proprietor: Koninklijke Philips Electronics N.V., 5621 BA Eindhoven (NL)
(72) Inventor: van Eijck, Gustavus Lambertus Petrus, NL-5656 AA Eindhoven (NL); Lokhoff, Gerardus Cornelis Petrus, NL-5656 AA Eindhoven (NL); Kneepkens, Franciscus Antonius, NL-5656 AA Eindhoven (NL); Sherry, John Felix, NL-5656 AA Eindhoven (NL)
(74) Representative: van der Kruk, Willem Leonardus

(56) References cited:
- EP-A- 0 087 886
- EP-A- 0 264 886
- EP-A- 0 268 454
- EP-A- 0 414 310
- EP-A- 0 500 159
- US-A- 4 912 574
- PATENT ABSTRACTS OF JAPAN vol. 9, no. 186 (P-377) 2 August 1985 & JP-A-60 055 578 (MATSUSHITA DENKI SANGYO KK) 30 March 1985

## Description

The invention relates to a system for recording and reproducing a digital audio signal on/from a re-recordable record carrier, comprising a recording arrangement for recording the digital audio signal in a track on the record carrier and comprising a reproducing arrangement for reproducing the digital audio signal from the track of the record carrier,
the recording arrangement comprising
- an input terminal for receiving the digital audio signal,
- first conversion means for converting the digital audio signal in a data reduction step into a second digital signal comprising synchronisation information, bitallocation information, scalefactor information and audio signal information included in subsequent frames of the second digital signal,
- second conversion means for converting the second digital signal into a third digital signal so as to enable an error correction to be carried out in the reproducing arrangement on the third digital signal read from the track,
- write means for writing the third digital signal in the track on the record carrier, the reproducing arrangement comprising
- read means for reading the third digital signal from the track on the record carrier,
- third conversion means for correcting errors in the third digital signal read from the track, for generating an error-flag if it is not capable of correcting an error, and for reconverting the third digital signal into the second digital signal,
- fourth conversion means for reconverting the second digital signal so as to obtain the digital audio signal,
- concealment means for concealing uncorrectable errors in the digital audio signal in response to error flags generated by the error-correction means,
- an output terminal for supplying the digital audio signal.

A system in accordance with the opening paragraph had been described in European patent application no. 500159, reference (6) in the list of references at the end of this description, published later but having a priority date earlier than the priority date of the present application. The application describes a system including recording arrangements and reproducing arrangements of the DCC type, which enable audio in digital form to be recorded and reproduced on/from a magnetic record carrier incorporated in a compact cassette like housing. The audio signal reproduced has a substantially CD quality.

The present invention enables a further improvement of the system, so that it is possible to re-record a digital audio signal partly over a terminal portion of an earlier recording, such that, during reproduction of the earlier recording and the new recording, the probability of occurrence of an audible distortion as a result of the reproduction over the boundary between the earlier and the new recording is significantly decreased.

To that purpose, the recording arrangement of the system further comprises signal processing means for further processing a digital signal in the recording arrangement in response to the switching of the recording arrangement into a recording mode, so as to mutilate information included in a start portion of the third digital signal which is to be recorded in the track, the information included in the start portion being mutilated such that, during reproduction, the mutilated information included in the start portion of the signal read from the track, results in generating a concealment control signal during a first time interval which is applied to the concealment means so as to conceal the digital signal during said first time interval, the said first time interval at least including the time of reproduction of the start portion of the reproduced digital signal.

As an alternative, the system in accordance with the opening paragraph is characterized in that the recording arrangement further comprises signal processing means for further processing a digital signal in the recording arrangement in response to and directly preceding the termination of a recording mode, so as to mutilate information included in a terminal portion of the third digital signal which is to be recorded in the track, the information included in the terminal portion being mutilated such that, during reproduction, the mutilated information included in the terminal portion of the signal read from the track, results in generating a concealment control signal during a second time interval which is applied to the concealment means so as to conceal the digital signal during said second time interval, the said second time interval at least including the terminal portion of the reproduced digital signal.
The two characterizing measures can be applied separately or in combination.

The invention is also a system as claimed in clims 3 or 4, a recording arrangement as claimed in claims 7,8,9 or 10, a re-recordable recored carrier as claimed in claim 16 or a reproducing arrangement as claimed in claims 17 or 18.

The invention is based on the recognition that, during reproduction, the start portion of the second digital signal of the new recording need not be contiguous to the terminal portion of the remaining part of the second digital signal of the earlier recording.

The term 'not' contiguous' means that the boundary, in the second digital signal reproduced from the record carrier, between the original recording and the start portion of the new recording is not exactly located at the boundary between two subsequent complete frames in the second digital signal, the first one of the two complete frames being the last frame of the original signal adjoining the boundary, and the second one of the two frames being the first complete frame in the second digital signal of the new recording. The two signals are not contiguous if the last frame of the original signal and/or the first frame in the second digital signal of the new recording are not complete. This can lead to an incorrect reconversion in the fourth conversion means. As a result an audible distortion can occur in the reproduced audio signal.

By mutilating, during the recording step, the information included in a start portion of the new recording such that, during reproduction a concealment control signal is generated so as to conceal the read-out digital signal, it has been assured that the probability of occurrence of audible distortions is reduced to substantially zero. Concealment of the digital signal can be realized in various ways. Concealment can mean: repeating previous correct signal samples or signal portions, interpolating between correct signal samples or signal portions that are located around the start portion of the new recording, muting the start portion of the new recording, e.g. by setting the samples to zero.

In the same way it may be possible that the terminal portion of the original recording lies beyond the terminal portion of a new recording on the record carrier. This means that the terminal portion of the new recording is followed by the remaining part of the original recording. The boundary between both can in the same way be the cause of audible distortions in the reproduced audio signal. In order to preclude this, it is preferred to mutilate the information included in a terminal portion of the new recording as well, so that, during reproduction, a concealment control signal can be generated, so as to conceal the read-out digital signal.

There are various possibilities to mutilate the signal to be recorded. The `mutilation of the signal' should be interpreted in a non-restrictive sense. It includes amongst others a scrambling of the signal to be recorded. Another possibility is that the parity information, normally included in the signal to be recorded, is mutilated. This `mutilation of the signal' results in uncorrectable errors in the signal read from the record carrier. As a result error flags are generated by the third conversion means, which activates one of the concealment methods described above. The error flags form in this case the concealment control signal, under the influence of which the concealment of the signal read out is activated.

'Mutilating the signal' however also includes a signal processing step in which additionally concealment codes are added to the signal to be recorded. Those concealment codes can be detected by a detector in the reproducing arrangement, so as to generate the concealment control signal.

As a further alternative, it should be noted that the concealment codes need not necessarily be added to the digital signal and to be recorded in the same track as the digital signal. It is equally possible to record the concealment codes in a separate track.

It should be noted that published European patent application EP 414,310 A1, reference (11) in the list of references, describes record carriers of the write-once type. Such record carriers can not be overwritten, so that a fault in the recorded signal, such as the recording of an undesirable signal, can not be corrected. The application now proposes a mutilation of the undesired signal recorded previously in a record carrier, so as to generate error flags during reproduction and to activate a muting function in response thereto. Contrary to this, the present invention proposes the 'mutilation' of the start or end portion of the new recording so as to decrease the probability of occurrence of audible distortions.

It should be noted that US-A 4,912,574 discloses an arrangement for recording a digital information signal in slant tracks on a record carrier, capable of recording an anti-format signal in the discontinuous portion between two subsequently recorded signals. The known arrangement however does not mutilate data reduced information prior to recording, nor records an auxiliary signal together with the data reduced information, which auxiliary signal has a concealment code added to it.

The invention will now be described in more detail in the following Figure description, in which
Figure 1 shows a prior art recording arrangement,
Figure 2 shows the format of the second digital signal,
Figure 3 shows the format of the tracks on the record carrier,
Figure 4 shows the format of the third digital signal as it is recorded in the tracks on the record carrier,
Figure 5 shows the RAM memory included in the second conversion means for carrying out the error correction coding step in the recording arrangement,
Figure 6 shows a prior art reproducing arrangement,
Figure 7 shows the second digital signal as it is read out, in the case of the read-out of an original recording (Figure 7a), in the case of a new recording made partly over an original recording (Figure 7b and 7c),
Figure 8 shows an embodiment of the part of the recording arrangement incorporating the invention,
Figure 9 shows another embodiment of a part of the recording arrangement incorporating the invention,
Figure 10 shows another format of the second digital signal,
Figure 11 an embodiment of the reproducing arrangement in accordance with the invention,
Figure 12 shows the second digital signal as it is read out, in the case of the read-out of an original recording (Figure 12a), in the case of a new recording made partly over an original recording (Figure 12b and 12c),
Figure 13 and 14 show an embodiment in which a concealment code is recorded in a separate track on the record carrier.

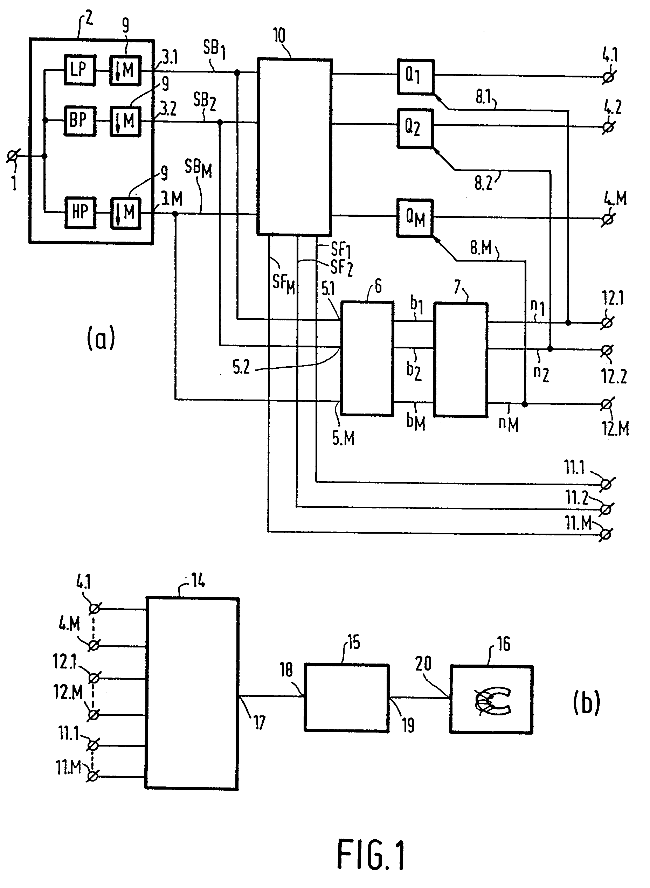

Figure 1 shows in (a) the first conversion means of a prior art recording arrangement. An input terminal 1 is supplied with a wide-band digital signal. In this context one may think of an audio signal having a bandwidth of about 20 kHz. The audio signal may be a stereo audio signal. In that case only one of the two signal portions (the left or right signal portion) of the stereo audio signal will be further discussed. The other signal portion will then be subject to the same process.

Input 1 is supplied with, for example, 16-bit samples of, for example, the left signal portion of the audio signal having a 44 kHz sample frequency. The audio signal is applied to a sub-band coder 2 comprising an analysis filter means. The sub-band coder 2 distributes the audio signal over M sub-bands by means of M filters *i.e.* a low-pass filter LP, M-2 bandpass filters BP and a high-pass filter HP. M is equal to, for example, 32. The sample frequency of the M sub-band signals is reduced in the blocks referenced 9. In such a block the sample frequency is reduced by a factor of M. The signals thus obtained are presented at the outputs 3.1, 3.2, ... 3.M. At the output 3.1 the signal is presented in the lowest sub-band SB₁. At the output 3.2 the signal is presented in the lowest but one sub-band SB₂. At the output 3.M the signal is presented in the highest sub-band SBₘ. The signals at the outputs 3.1 to 3.M have the form of successive samples expressed in 16-bit numbers or more, for example, 24-bit numbers. In the present exemplary embodiment the sub-bands SB₁ to SB_{M} are all equally wide.

However, this is not necessary. In the prior-art publication (5), Krasner, proposes a subdivision into a plurality of sub-bands whose bandwidths approximately correspond to the bandwidths of the critical bands of the human auditory system in the respective frequency areas.

The operation of the sub-band coder 2 will not be explained any further because the operation of the sub-band coding means has already been extensively discussed. For this purpose, the reader be referred to the prior-art documents (1), (5) and (7) which are assumed to be included in this application where necessary.

The sub-band signals are combined in consecutive signal blocks of q successive samples, and applied to an associated quantizer Q₁ to Q_{M}. In a quantizer Qₘ the samples are quantized to quantized samples having a number of bits nₘ smaller than 16.

Figure 1 shows how the left sub-band signals in signal blocks of q successive samples are applied to an associated quantizer Qₘ. In like manner the right sub-band signals in signal blocks of q successive samples are applied to an associated quantizer (not shown). During the quantization process the signal blocks (groups) of q successive samples of the sub-band signal portions are each time quantized to a smaller number of bits. For example, q is equal to 12. In addition, the q samples are first normalized in a signal block 10. This normalization is effected by dividing the amplitudes of the q samples by the amplitude of the sample having the largest absolute value in the signal block. The amplitude of the sample having the largest amplitude in the signal block of the sub-band SBₘ produces a scale factor SFₘ, see document (2). Subsequently, the amplitudes of the normalized samples which are now situated in an amplitude range from -1 to +1, are quantized.

In the prior-art document (2) this quantization is extensively discussed, *cf*. Figs. 24, 25 and 26 and the relevant description in that document.

The quantized samples in the sub-bands SB₁ to SB_{M} are then presented at the respective outputs 4.1 to 4.M.

The outputs 3.1 to 3.M are furthermore coupled to the respective inputs 5.1 to 5.M of bit need determining means 6. The bit need determining means 6 determines for time-equivalent q-sample signal blocks of the left and right sub-band signal portions in the sub-bands SB₁ to SB_{M} the bit need bₘ. The bit need bₘ is a relative number which bears a proportion to the number of bits with which the q samples in a q-sample signal block in a sub-band signal portion should be quantized.

The bit needs b₁ to b_{M} derived by the bit need determining means 6, are applied to bit allocation means 7. The bit allocation means 7 determines the actual number of bits n₁ to n_{M} with which the q samples of the corresponding signal blocks in the sub-band signals SB₁ to SB_{M} are to be quantized on the basis of the bit needs b₁ to b_{M}. Control signals corresponding to the numbers n₁ to n_{M} are applied to the respective quantizers Q₁ to Q_{M} over the lines 8.1 to 8.M, so that the quantizers are capable of quantizing the samples with the correct number of bits.

Documents (9a) and (9b) of the list of references extensively discuss the operation of the bit need determining means 6 and the bit allocation means 7.

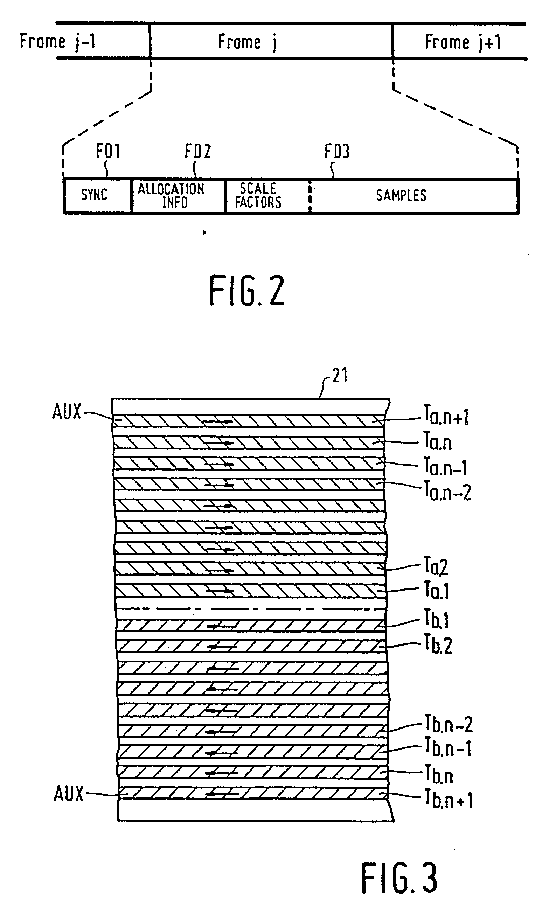

The quantized samples in the signal blocks of the sub-band signals are thereafter applied to inputs 4.1 to 4.M of a signal combining unit 14. In like manner the bit allocation information formed from the numbers n₁ to n_{M}, after a conversion as required, is applied to the inputs 12.1 to 12.M of the combining unit 14. Also the scale factor information formed from the scale factors SF₁ to SF_{M}, after a conversion as required, is applied to the inputs 11.1 to 11.M of the combining unit 14. The signal obtained at the output 17 of the signal combination unit 14 is the second digital signal, whose format is shown in Figure 2.

Figure 1b shows a second section of the recording arrangement, which section further includes a second conversion means 15 in addition to the combining unit 14, as well as write means 16 for applying the signal presented at its input to the re-recordable record carrier. In this case this record carrier is a magnetic record carrier.

In addition to the samples, the bit allocation information and the scale factor information for the left signal portions in the sub-bands, also the samples, the bit allocation information and the scale factor information for the right signal portions in the sub-bands are applied to the combining unit 14. The unit 14 combines the signals and accommodates them in successive frames of the second digital signal presented at its output 17.

Figure 2 shows the format of this second digital signal. This format is extensively discussed in document (2) of the list of references, which document is assumed to be included in the present application where deemed necessary. Fig. 2 shows the second digital signal comprising the successive frames j-1, j, j+1 and shows how a frame may be constituted. The frame comprises a first frame portion FD1 in which sync information may be contained, a second frame portion FD2 in which the allocation information may be contained and a third frame portion FD3. This third frame portion first contains the scale factor information and then the samples of the quantized signals in the sub-bands. For a further description reference be made to document (2).

The second digital signal is applied to the input 18 of the second converter means 15. In this converter means another encoding is performed of the second digital signal so that at the reproducer side an error correction of the received information is possible. For this purpose, for example, a Reed solomon encoding and possibly an interleaving is used for the second digital signal.

Furthermore, the signal is encoded in such a way that the information to be recorded is suitable for recording on the record carrier. Therefore, for example, an 8-to-10 encoder can be used for the 8-bit words constituting the signal. Such an 8-to-10 conversion is described, for example, in European Patent Application 150 082, document (10) in the list of references. During this conversion the 8-bit information words are converted to 10-bit codewords.

The third digital signal thus obtained is presented at the output 19. This output 19 is coupled to input 20 of the writing means 16 for writing the third digital signal in a track on the magnetic record carrier.

Fig. 3 shows the record carrier 21 with the tracks provided on the record carrier. On the A side there are n+1 tracks T_{a.1} to T_{a.n+1} which are parallel with each other and run in longitudinal direction on the record carrier. The B side likewise has n+1 tracks T_{b.1} to T_{b.n+1}.

The tracks T_{a.n+1} and T_{b.n+1} are auxiliary tracks referenced AUX in which an auxiliary signal is recorded, as described in European Patent Application No. 436,991, reference (3) in the Reference List.

Digitized and encoded audio information is recorded, together with synchronization and system information in the tracks T_{a. 1} to T_{a.n} and T_{b.1} to T_{b.n} on the magnetic record carrier. The audio information is included in frames in the tracks. These frames are all of substantially the same length.

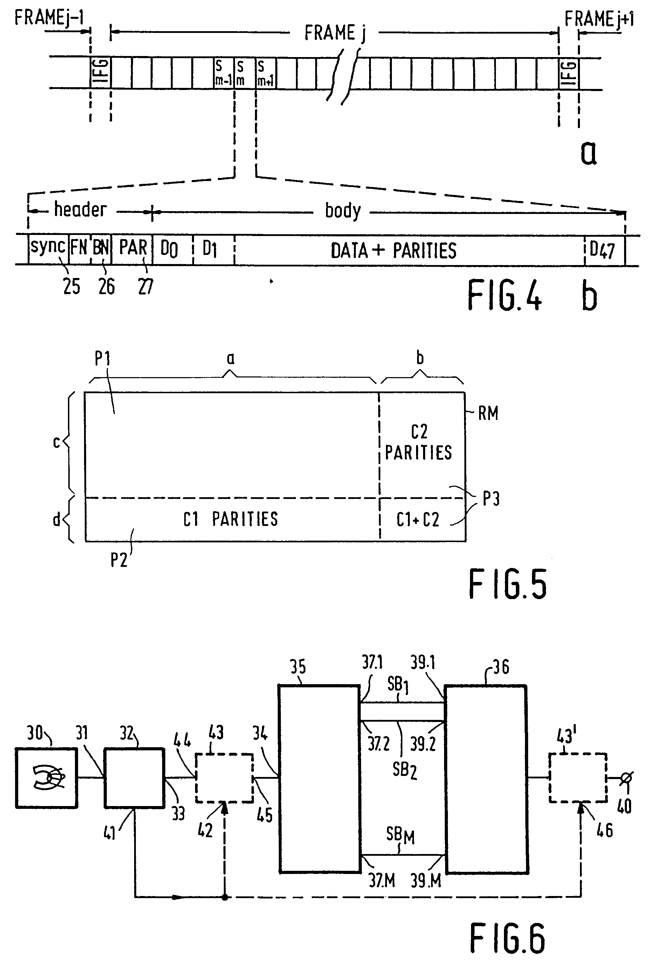

Figure 4a shows a track T_{a.i} and the structure of the frames in this track. The other tracks are structured in similar fashion. The format of the track is extensively described in European Patent Application No. 456,299, publication (4) in the Reference List.

The track is constituted by consecutive frames ..., j-1, j, j+1, ... interrupted by interframe gaps IFG. The interframe gaps are extensively described in European Patent Application No. 448,160, publication (8) in the Reference List. For a further explanation of these interframe gaps reference be made to that Patent Application. A frame comprises a number of information blocks ..., Sₘ₋₁, Sₘ, Sₘ₊₁, .... In the present example the frames comprise each 32 information blocks. Fig. 4b shows the contents of a block, such as the block Sₘ. Each block is constituted by a first block section (header) and a second block section (body). The header comprises a sync word 25, a frame number FN, a block number BN and a parity word PAR. The contents of the body are both the digital information representing the recorded audio signal and parity information. The body contains 48 bytes of 10 bits each. For a further explanation reference be made to publication (4).

A further explanation will be given how the serial datastream of the second digital signal is converted into the third digital as it is recorded in the track.

The information included in the serial datastream of the second digital signal is divided in bytes of 8 bits long, and is stored, if needed after an interleaving step, in a RAM memory RM, see Figure 5, included in the conversion means 15. More specifically, the RAM memory RM is capable of storing the information included in about 21 and 1/3 frames of the second digital signal in the part P1 of the RAM. In total a number of a.c of bytes of the second digital signal are stored in the a rows and c columns comprised in the part P1 of the RAM. A C₁ error correction coding step is bytes for each row. Those parity bytes are stored in the part P2 of the RAM. Next a C₂ error correction coding step is carried out column-wise over the (c+d) rows in the RAM, so as to obtain a number of b parity bytes for each column. Those parity bytes are stored in the part P3 of the RAM. Next, the RAM is read-out column-wise, and applied to the 8-to-10 encoder. One could imagine that (c+d) equals the number n, which is the number of tracks on the record carrier in which the third digital signal is to be recorded. In that case the a+b bytes in a column are encoded and recorded in a corresponding one of the n tracks. The information included in each of the c+d columns of the RAM could be encoded by c+d corresponding 8-to-10 encoders. Another possibility is that the information in the c+d rows are encoded in time-multiplex by one single 8-to-10 encoder. In this last case, care should be taken that the correct running DSV is used for the encoding of the information that should be recorded in one track. The a+b bytes of 10 bits each are recorded in the body of the track frames on the record carrier. Further, the header-information is added to the information recorded. The n track frames that adjoin each other in the n tracks T_{a.1} to T_{a.n} form a tape frame.

Figure 6 shows in a diagram an embodiment of the prior art reproducing arrangement. The reproducing arrangement comprises read means 30 for reading the third digital signal from the tracks on the record carrier.

The read-out third digital signal is applied to an input 31 of third conversion means 32. In the means 32 first a 10-to-8 conversion is performed in an inverse way compared to the 8-to-10 encoding described above. Then an error correction operation is carried out and a possible de-interleaving of the information that has been read out. The thus decoded signal again corresponds to the second digital signal as is represented in Figure 2, and is presented at an output 33. The second digital signal is applied to an input 34 of a fourth conversion means, which comprise the blocks 35 and 36. The block 35 derives from the frames shown in Figure 2 the allocation information, the scale factor information and the samples for each signal block in each sub-band. After dequantization and a multiplication by the scale factors the sub-band signals SB₁ to SB_{M} then appear at the outputs 37.1 to 37.M. These sub-band signals are applied to inputs 39.1 to 39.M of synthesis filter means 36 which restores the original digital signal from the sub-band signals. The operation of the synthesis filter means 36 is extensively discussed in document (7) of the citation index. The original digital signal is applied by the means 36 to an output 40 of the reproducing arrangement. For example, the left signal portion of the original digital signal is concerned here. Needless to observe that the means 35 has a further M outputs at which the sub-band signals of the right signal portion are available. Synthesis filter means (not shown) such as the filter means 36 is available for reconstructing the original right signal portion from these sub-band signals.

Errors detected in the incoming information can be corrected in the third conversion means 32. If an error turns out not to be corrigible, unit 32 will generate an error flag at an output 41. This error flag is applied to a control signal input 42 of concealment means in the form of an error masking system.

Error masking can be realized in various ways.

As a first possibility, an erroneous sample can be replaced by a correct previous sample. A second possibility is that an interpolation is carried out between two correct samples adjoining the erroneous sample on each side. If a number of consecutive error flags occur, a muting of the audio information is required. This can be realized by setting a number of samples to a zero value.

The error masking system may be arranged between the third conversion means 32 and the means 35, as is shown in a diagram in Figure 6 by means of block 43 represented in dashed lines. Error masking in response to error flags of the correction unit 32 is then performed on the second digital signal. The moment an error flag of the unit 32 occurs indicates to the masking system which information word in the serial data stream of the second digital signal of Figure 2 is erroneous.

Another option is to perform error masking by muting the audio signal as it is supplied at the output 40. This implies that the error flags are to be applied to a control signal input 46 of a error masking circuit 43', indicated in Figure 6 by dashed lines, which is coupled between the output of the synthesis filter means 36 and the output 40.

Next, it is described what happens if a new recording takes place when recording over an earlier recording.

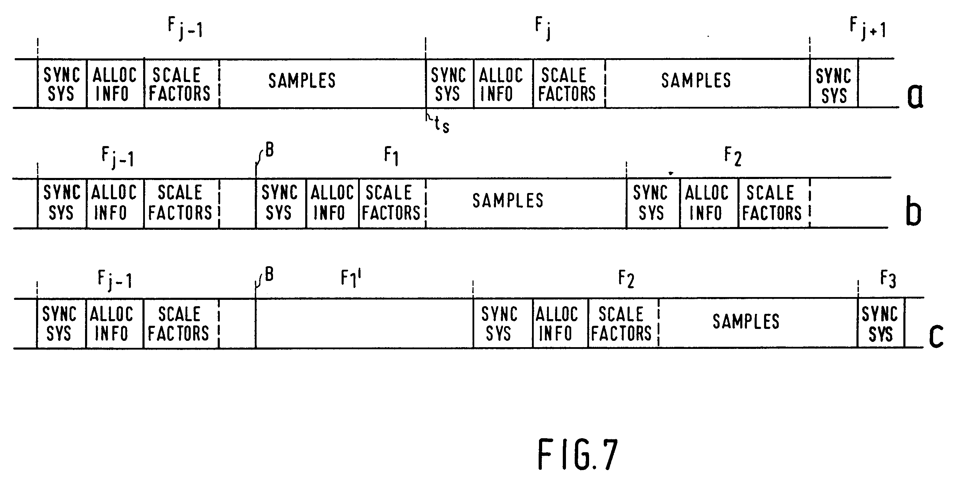

Figure 7a shows the serial datastream of the second digital signal, as it is read out and converted in the third conversion means, assuming that no interruption of the original recording has taken place. Subsequent frames ..., Fⱼ₋₁, Fⱼ, Fⱼ₊₁, .... follow each other and are supplied to the output 17 by the third conversion means 14.

Figure 7b shows the serial datastream of the second digital signal at the output 17 in the case that a new recording has taken place over a terminal part of the original recording. The boundary in the serial datastream of the second digital signal, between the remaining portion of the original recording and the start portion of the new recording is at the location indicated by B. The first frame F₁ in the serial datastream of the new recording already begins before the frame Fⱼ₋₁ of the original recording is terminated. Reconversion of the second digital signal into the various samples for the various subbands, is realized in the block 35 by detecting the allocation information in the second frame portions FD2 and counting the bits in the portion of the third frame portion FD3 that comprise the samples. In the same way, the samples are retrieved from the third frame portion of the frame Fⱼ₋₁. During reconverting, the block 35 is not aware of the fact that the boundary B exists between the original recording and the new recording, and thus continues counting the bits in the serial datastream past the location B. This results in an erroneous reconversion of the frame Fⱼ₋₁ in the block 35, so that an audible distortion occurs in the audio signal supplied at the output 40. At the time tₛ, which is the start of the frame Fⱼ of the original recording, the reconversion circuit expects to receive a new sync signal. As no such sync signal is detected, it waits until the next detection of a sync signal, which is the sync signal of the frame F₂ of the new recording. The audible distortion thus at least lasts during the occurrence of the frames Fⱼ₋₁ and F₁. Reconversion could now be resumed by reconverting the information contained in frame F₂. If the reconversion circuit requires at least two sync signals lying at the correct distance in time from each other, reconversion is resumed at a later time interval after having received the at least two frames F₂ and F₃.

Figure 7c shows another situation, where an original recording is partly overwritten by a new recording. It should be noted that the beginning of the new recording need not begin exactly with a complete frame, such as the frame F₁ in Figure 7b. Figure 7c shows that the new recording starts with an incomplete frame F₁'.

The reason for this is that the first conversion means, comprising the elements 2, 10, 14, and the second conversion means 15 are only loosely synchronized. This means that, during recording, the start of the encoding of the second digital signal in the second conversion means 15 need not exactly coincide with the start of a frame in the second digital signal.

As a result, during reproduction, the block 35 continues counting the bits in the serial datastream past the location B, without noticing the boundary between the original and the new recording. An audible distortion occurs, which distortion again at least lasts from the start of the frame Fⱼ₋₁ until the information in the frame F₂ has been received.

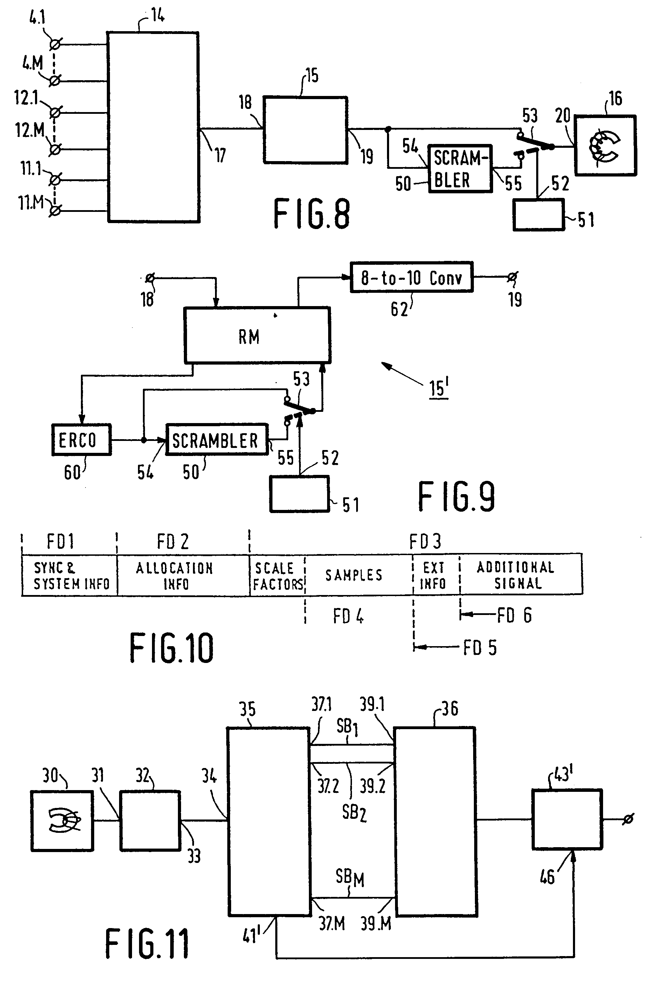

Figure 8 shows that part of a first embodiment of the recording arrangement incorporating the invention. Figure 8 shows the second part of the recording arrangement of Figure 1b. The arrangement further includes signal processing means, in the form of a scrambler 50, having an input 54 coupled to the output 19 of the second conversion means 15. The scrambler 50 is for scrambling the third digital signal in the recording arrangement during a first specific time interval in response to the switching of the recording arrangement into a recording mode. This switching into the recording mode is activated by a user pushing a recording button (not shown). A central processing unit 51 detects the actuation of the record button and generates a switching control signal at an output 52 which control signal is applied to a controllable switch 53. The switch 53 is positioned in the down position under the influence of the control signal, so as to couple the output 55 of the scrambler 50 to the input 20 of the write means, so that the information included in a start portion of the third digital signal recorded in the track is mutilated. The information included in the start portion is mutilated such that, during reproduction, the application to the third conversion means of the mutilated information included in the start portion read from the track, results in generating error flags at the output 41 of the third conversion means 32 so as to mute the digital signal during said first specific time interval. As a result no audible distortion occurs in the digital audio signal at the output 40 of the reproducing arrangement. From what has been said previously with respect to Figure 7b and 7c, the muting of the audio signal should at least cover the time interval in which the information corresponding to the erroneously decoded frames Fⱼ₋₁ and F₁ in the second digital signal is supplied to the output of the circuit 36, see Figure 6.

Preferably, only the information contained in the bodyportion of one or a number of consecutive track frames is scrambled, whilst the information contained in the header portion of a track frame remains unaffected. This makes it possible to maintain synchronization during read out.

In a second embodiment of the recording arrangement in accordance with the invention, the parity information added to the audio data in the second conversion means 15, is mutilated, or scrambled. Figure 9 shows a further detailed embodiment of the second conversion means, denoted by the reference numeral 15'. The conversion means 15' comprise a parity generator in the form of error correction coding unit ERCO 60, having an input coupled to an output of RAM memory RM and an output coupled to a terminal of a switch 53 as well as to an input of a scrambler 50. An output of the scrambler 50 is coupled to a second terminal of the switch 53. A third common terminal of the switch 50 is coupled to an input of the RAM memory RM. The parity generator 60 generates the C₁ and C₂ parity codewords as a result of the audio data included in the part P1 of the memory RM, which is applied to its input. With the switch 53 in the position as shown in Figure 9, the generator 60 supplies the parity information to the memory RM for storing the C₁ codewords in the part P2 and the C₂ parity words in the part P3 of the memory RM.

The central processing unit 51 detects the actuation of the record button and generates a switching control signal at an output 52 which control signal is applied to the controllable switch 53. The switch 53 is positioned in the down position under the influence of the control signal, so as to couple the output 55 of the scrambler 50 to the input of the memory RM. All the parity information included in the parts P2 and P3 of the memory RM can be scrambled. This results during reproduction in the generation of error flags and a muting of the audio signal during a first time interval that equals the time interval corresponding to the length of time of the audio information included in a tape frame.

Another possibility is to inhibit the calculation of the parity information for the parts P2 and P3 of the memory RM. Inhibiting the calculation of the parity information for the audio information included in the part P1 of the memory RM, means that the parts P2 and P3 in the memory RM still comprise the parity information corresponding to the audio information that was previously stored in the part P1. This parity information has no relation to the audio information newly stored in the part P1. Thus, during reproduction, again error flags will occur, leading to a muting of the audio signal.

But not all the parity information in the parts P2 and P3 of the memory RM need to be scrambled. It suffices to scramble, or mutilate, so many parity codewords in the parts P1 and P2 that a sufficient length of audio information, covering the transition between the two recordings, is muted during reproduction.

Still another possibility is to scramble at least part of the audio data included in the part P1, so that this in the same way leads to the generation of a sufficient number of error flags during reproduction, resulting in a muting of the audio signal.

In again another embodiment, the recording arrangement is adapted to insert concealment codes in the signal to be recorded, such that those concealment codes can be detected during reproduction. Upon detection of one or more concealment codes, the muting circuit 43 or 43' mutes the audio signal during the first specific period of time.

Figure 10 shows a frame in the second digital signal, generated by the first conversion means. The third frame portion FD3 is now further divided so as to include a fifth frame portion FD5 behind the portion of the frame comprising the samples. The format of the frame has been described extensively with reference to Figure 23 in European patent application no. 402,973, reference (2). The concealment code can now be inserted in the fifth frame portion of a frame, more specifically in the sixth frame portion FD6 of the said frame in the second digital signal. Another possibility is to insert the concealment code in the system information (SYS INFO) in the first frame portion FD1 of the frame.

The concealment code can be in the form of one bit which is located on a fixed location in the frame. If the bit is logical '1', this can mean that the concealment code is present. A bit which is logical '0' means that no concealment code is present.

In the case that the concealment code is inserted in the frame portion FD6, that is, at the end of the frame, it would suffice to include the concealment code in the first frame F₁ or F₁', see Figure 7b or 7c respectively, of the new recording. Preferably, the concealment code is inserted in a number of frames of the second digital signal by the first conversion means, more specifically by the unit 14 in Figure 1b, so that during reproduction at least the frame F₁ or F₁', see Figure 7b and 7c respectively, contain the concealment code.

In the case that the concealment code is inserted in the first frame part FD1, it is necessary to insert the concealment code in at least the first two frames F₁ and F₂ of the new recording, so that also in the case of the situation described in Figure 7c, the concealment code can be detected during reproduction.

Again it should be noted that, in order to conceal the distortion, the specific first time interval during which concealing takes place should cover at least the time interval during which the information corresponding to the incorrectly decoded frames Fⱼ₋₁ and F₁ or F₁' is supplied to the output of the element 36, see Figure 11.

Figure 11 shows an embodiment of the reproducing arrangement which is capable of detecting the concealment codes, so as to activate the concealment function during the specific period of time. The fourth conversion means 35 that receive the second digital signal including the frames, such as the frame of Figure 10, is capable of detecting the concealment code. Upon detection of the concealment code, the means 35 generate a concealment control signal at the output 41', which signal is applied to the control input 46 of the concealment circuit 43', so as to conceal the audio signal during the specific period of time.

Concealing the signal can again mean a muting of the audio signal, which is in fact what Figure 11 shows. Another possibility is that the frame Fⱼ₋₂ lastly decoded correctly, is repeated, or that an interpolation is carried out.

Now, it will be described what happens at the end of the new recording, more specifically, in the situation where a terminal portion of the original recording is not overwritten by the new recording and thus still is present after the end of the new recording on the record carrier.

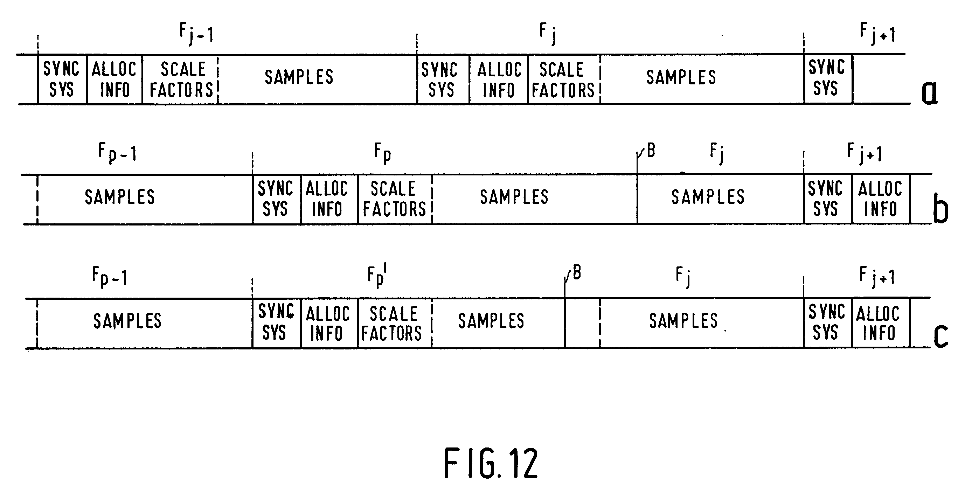

Figure 12a shows the second digital signal generated at the output 33 of the third conversion means 32 when reproducing the original recording. This Figure 12a in fact equals the Figure 7a. Figure 12b and 12c show situations where the original recording has been partly overwritten, so that a boundary B exists between the terminal part of the new recording and the remaining part of the original recording. In Figure 12b, the new recording ends with a complete frame Fₚ. In Figure 12c, the new recording ends with an incomplete frame Fₚ'.

In order to preclude the occurrence of disturbances in the audio signal reproduced as a result of the presence of the boundary B, one of the measures described above can be applied at the termination of the new recording, in response to the user activating the 'record stop' button on the recording arrangement.

Thus, a concealment function is activated during a specific second period of time so as to conceal the audio signal during reproduction past the boundary B. The second specific period of time should at least cover the time interval in which the information corresponding with the incorrectly decoded frames Fₚ' and Fⱼ, see Figure 12c, are supplied to the output of the circuit 36. The length of the first time interval can be taken equal to the second time interval.

In addition to the measures described above, it is advisable to start the new recording with an audio signal of very low (zero) level, and to fade the audio level in to the required level. In the same way it is advisable to terminate the new recording with an audio level that is faded out to a zero level.

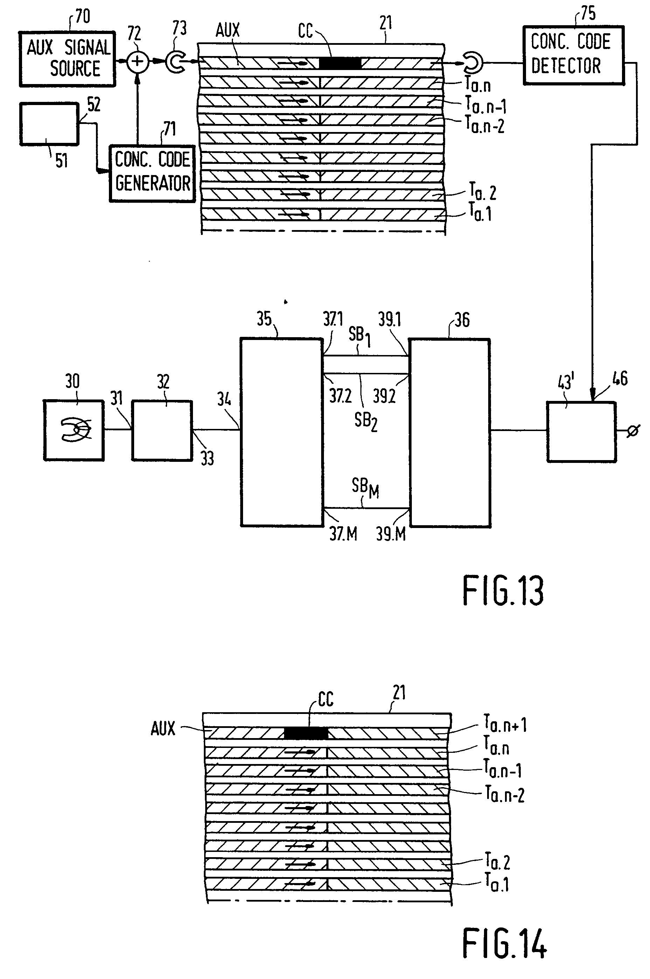

A further embodiment is shown in figure 13, and shows the recording of the concealment code cc in the auxiliary track T_{a.n+1} of the record carrier 21. The recording arrangement comprises an auxiliary signal source 70 for generating the auxiliary signal. The auxiliary signal includes table of contents (TOC) information, such as the sequence numbers of the musical items and position information relating to the start positions of the musical items recorded on the record carrier. The position information can be in the form of timing information. The auxiliary information is supplied to a first input of a signal combination unit 72, which has an output coupled to a read head 73. The arrangement further comprises a concealment code generator 71 which generates a concealment code cc under the influence of a control signal supplied by the central processing unit 51 via its output 52 to the generator 71. The control signal at the output 52 is generated in response to the arrangement being switched into the recording mode, which switching into the recording mode is detected by the central processing unit 51. The concealment code is supplied to a second input of the combination unit 72. The head 73 records the auxiliary signal and the concealment code (if present) in the AUX track T_{a.n+1}.

Figure 13 further shows the top half of the record carrier. The original recording is indicated by the portions of the tracks being hatched by lines from top left to bottom right. The portions of the tracks being hatched from top left to bottom rigth as well as from top right to bottom left indicate the new recording. Clearly visible is the concealment code, which is indicated by the black spot cc, and which is located in the start portion of the new recording of the auxiliary signal.

Figure 13 further shows the reproducing arrangement, which now includes a concealment code detector 75. During reproduction, the detector 75 detects the concealment code and generates the concealment control signal which is supplied to the control signal input 46 of the concealment means 43'.

Figure 14 shows the recording of the concealment code cc on the terminal part of the aux track T_{a.n+1} in response to the termination of the recording mode over a previous recording. Again the portions of the tracks being hatched by lines from top left to bottom right indicate the original recording. The portions of the tracks being hatched from top left to bottom rigth as well as from top right to bottom left indicate the new recording. Clearly visible is the concealment code, which is indicated by the black spot cc, and which is located in the terminal portion of the new recording of the auxiliary signal.

### REFERENCES:

(1) European Patent Application no. 289.080 (PHN 12.108).
(2) European Patent Application no. 402,973 (PHN 13.241).
(3) European Patent application no. 436,991 (PHN 13.209).
(4) European Patent application no. 456,299 (PHN 13.315).
(5) IEEE ICASSP 80, Vol. 1, 327-331, April 9-11-1980 M.A. Krasner "The critical band coder ..... Digital encoding of speech signals based on perceptual requirements of the auditory system".
(6) European Patent Application no. 500159 (PHN 13.596).
(7) European Patent Application no. 400.755 (PHQ 89.018A).
(8) European Patent Application no. 448,160 (PHN 13.281).
(9a) European Patent Application no. 457,390 (PHN 13.328).
(9b) European Patent Application no. 457,391 (PHN 13.329).
(10) European Patent Application no. 150.082 (PHN 11.117).
(11) European Patent Application no. 414,310 (PHN 13.064)

## Claims

1. A system for recording and reproducing a digital audio signal on/from a re-recordable record carrier (21), comprising a recording arrangement (14,15,16) for recording the digital audio signal in a track on the record carrier and comprising a reproducing arrangement (30,32,35,36) for reproducing the digital audio signal from the track of the record carrier,
the recording arrangement comprising
- an input terminal (1) for receiving the digital audio signal,
- first conversion means (14) for converting the digital audio signal in a data reduction step into a second digital signal comprising synchronisation information, bitallocation information, scalefactor information and audio signal information included in subsequent frames of the second digital signal,
- second conversion means (15) for converting the second digital signal into a third digital signal so as to enable an error correction to be carried out in the reproducing arrangement on the third digital signal read from the track,
write means (16) for writing the third digital signal in the track on the record carrier, the reproducing arrangement comprising
- read means (30) for reading the third digital signal from the track on the record carrier,
- third conversion means (32) for correcting errors in the third digital signal read from the track, for generating an error-flag if it is not capable of correcting an error, and for reconverting the third digital signal into the second digital signal,
- fourth conversion means (35,36) for reconverting the second digital signal so as to obtain the digital audio signal,
- concealment means (43) for concealing uncorrectable errors in the digital audio signal in response to error flags generated by the error-correction means,
- an output terminal (40) for supplying the digital audio signal, the recording arrangement further comprising signal processing means (51,53,54) for further processing a digital signal in the recording arrangement in response to the switching of the recording arrangement into a recording mode, so as to mutilate information included in a start portion of the third digital signal which is to be recorded in the track, the information included in the start portion being mutilated such that, during reproduction, the mutilated information included in the start portion of the signal read from the track, results in generating a concealment control signal during a first time interval which is applied to the concealment means so as to conceal the digital signal during said first time interval, the said first time interval at least including the time of reproduction of the start portion of the reproduced digital signal.

2. A system for recording and reproducing a digital audio signal on/from a re-recordable record carrier, (21) comprising a recording arrangement (14,15,16) for recording the digital audio signal in a track on the record carrier and comprising a reproducing arrangement (30,32,35,36) for reproducing the digital audio signal from the track of the record carrier,
the recording arrangement comprising
- an input terminal (1) for receiving the digital audio signal,
- first conversion means (14) for converting the digital audio signal in a data reduction step into a second digital signal comprising synchronisation information, bitallocation information, scalefactor information and audio signal information included in subsequent frames of the second digital signal,
- second conversion means (15) for converting the second digital signal into a third digital signal so as to enable an error correction to be carried out in the reproducing arrangement on the third digital signal read from the track,
- write means (16) for writing the third digital signal in the track on the record carrier, the reproducing arrangement comprising
- read means (30) for reading the third digital signal from the track on the record carrier,
- third conversion means (32) for correcting errors in the third digital signal read from the track, for generating an error-flag if it is not capable of correcting an error, and for reconverting the third digital signal into the second digital signal,
- fourth conversion (35,36) means for reconverting the second digital signal so as to obtain the digital audio signal,
- concealment means (43) for concealing uncorrectable errors in the digital audio signal in response to error flags generated by the error-correction means,
- an output terminal (40) for supplying the digital audio signal, the recording arrangement further comprising signal processing means for (51,53,54) further processing a digital signal in the recording arrangement in response to and directly preceding the termination of a recording mode, so as to mutilate information included in a terminal portion of the third digital signal which is to be recorded in the track, the information included in the terminal portion being mutilated such that, during reproduction, the mutilated information included in the terminal portion of the signal read from the track, results in generating a concealment control signal during a second time interval which is applied to the concealment means so as to conceal the digital signal during said second time interval, the said second time interval at least including the time of reproduction of the terminal portion of the reproduced digital signal.

3. A system for recording and reproducing a digital audio signal on/from a re-recordable record carrier (21), comprising a recording arrangement (14,15,16) for recording the digital audio signal in a track on the record carrier and comprising a reproducing arrangement (30,32,35,36) for reproducing the digital audio signal from the track of the record carrier,
the recording arrangement comprising
- an input terminal (1) for receiving the digital audio signal,
- first conversion means (14) for converting the digital audio signal in a data reduction step into a second digital signal comprising synchronisation information, bitallocation information, scalefactor information and audio signal information included in subsequent frames of the second digital signal,
- second conversion means (15) for converting the second digital signal into a third digital signal so as to enable an error correction to be carried out in the reproducing arrangement on the third digital signal read from the track,
- a signal source (70) for generating an auxiliary signal,
- write means (16) for writing the third digital signal in the track on the record carrier and for writing the auxiliary signal in an auxiliary track on the record carrier, the reproducing arrangement comprising
- read means (30) for reading the third digital signal from the track on the record carrier and for reading the auxiliary signal from the auxiliary track on the record carrier,
- third conversion means (32) for correcting errors in the third digital signal read from the track, for generating an error-flag if it is not capable of correcting an error, and for reconverting the third digital signal into the second digital signal,
- fourth conversion means (35,36) for reconverting the second digital signal so as to obtain the digital audio signal,
- concealment means (43) for concealing uncorrectable errors in the digital audio signal in response to error flags generated by the error-correction means,
- an output terminal (40) for supplying the digital audio signal, the recording arrangement further comprising signal processing means (51,71,72) for further processing the auxiliary signal in the recording arrangement in response to the switching of the recording arrangement into a recording mode, so as to add at least one concealment code to a start portion of the auxiliary signal which is to be recorded in the auxiliary track, the reproducing arrangement further comprising detector means (75) for detecting the at least one concealment code in the auxiliary signal read from the track, for generating a concealment control signal during a first time interval in response to the at least one concealment code detected and for supplying the concealment control signal to the concealment means so as to conceal the digital signal during said first time interval, the said first time interval at least including the time of reproduction of the start portion of the reproduced digital signal.

4. A system for recording and reproducing a digital audio signal on/from a re-recordable record carrier (21), comprising a recording arrangement (14,15,16) for recording the digital audio signal in a track on the record carrier and comprising a reproducing arrangement (30,32,35,36) for reproducing the digital audio signal from the track of the record carrier, the recording arrangement comprising
- an input terminal (1) for receiving the digital audio signal,
- first conversion means (14) for converting the digital audio signal in a data reduction step into a second digital signal comprising synchronisation information, bitallocation information, scalefactor information and audio signal information included in subsequent frames of the second digital signal,
- second conversion means (15) for converting the second digital signal into a third digital signal so as to enable an error correction to be carried out in the reproducing arrangement on the third digital signal read from the track,
- a signal source (70) for generating an auxiliary signal,
- write means (16) for writing the third digital signal in the track on the record carrier and for writing the auxiliary signal in an auxiliary track on the record carrier, the reproducing arrangement comprising
- read means (30) for reading the third digital signal from the track on the record carrier and for reading the auxiliary signal from the auxiliary track on the record carrier,
- third conversion means (32) for correcting errors in the third digital signal read from the track, for generating an error-flag if it is not capable of correcting an error, and for reconverting the third digital signal into the second digital signal,
- fourth conversion means, (35,36) for reconverting the second digital signal so as to obtain the digital audio signal,
- concealment means (43) for concealing uncorrectable errors in the digital audio signal in response to error flags generated by the error-correction means,
- an output terminal (40) for supplying the digital audio signal, the recording arrangement further comprising signal processing means (51,71,72) for further processing the auxiliary signal in the recording arrangement in response to and directly preceding the termination of a recording mode, so as to add at least one concealment code to a terminal portion of the auxiliary signal which is to be recorded in the auxiliary track, the reproducing arrangement further comprising detector means (75) for detecting the at least one concealment code in the auxiliary signal read from the track, for generating a concealment control signal during a second time interval in response to the at least one concealment code detected and for supplying the concealment control signal to the concealment means so as to conceal the digital signal during said second time interval, the said second time interval at least including the time of reproduction of the terminal portion of the reproduced digital signal.

5. A system as claimed in Claim 1 or in Claim 1 and 2, the signal processing means comprising signal combining means (72) for additionally adding at least one concealment code (CC) to the start portion of the second or third digital signal, the reproducing arrangement further comprising detector means (75) for detecting the at least one concealment code in the second or third digital signal read from the track and for generating the concealment control signal during said first time interval in response to the at least one concealment code detected.

6. A system as claimed in Claim 2 or in Claim 1 and 2, the signal processing means comprising signal combining means (72) for additionally adding at least one concealment code (CC) to the terminal portion of the second or third digital signal, the reproducing arrangement further comprising detector means (75) for detecting the at least one concealment code in the second or third digital signal read from the track and for generating the concealment control signal during said second time interval in response to the at least one concealment code deteted.

7. A recording arrangement for recording a digital audio signal on a re-recordable record carrier (21), comprising
- an input terminal (1) for receiving the digital audio signal,
- first conversion means (14) for converting the digital audio signal in a data reduction step into a second digital signal comprising synchronisation information, bitallocation information, scalefactor information and audio signal information included in subsequent frames of the second digital signal,
- second conversion means (15) for converting the second digital signal into a third digital signal so as to enable an error correction to be carried out in the reproducing arrangement on the third digital signal read from the track,
- write means (16) for writing the third digital signal in the track on the record carrier, the recording arrangement further comprising signal processing means (51,53,54) for further processing the digital signal in response to the switching of the recording arrangement into a recording mode, so as to mutilate information included in a start portion of the third digital signal which is to be recorded in the track, the information included in the start portion being mutilated such that, during reproduction in a reproduction arrangement which is provided with concealment means for concealing uncorrectable errors present in the third digital signal upon reproduction, the mutilated information included in the start portion of the signal read from the track, results in generating a concealment control signal during a first time interval which is applied to the concealment means so as to conceal the digital signal during said first time interval, the said first time interval at least including the time of reproduction of the start portion of the reproduced digital signal.

8. A recording arrangement for recording the digital audio signal in a track on a re-recordable record carrier (21), comprising
- an input terminal (1) for receiving the digital audio signal,
- first conversion means (14) for converting the digital audio signal in a data reduction step into a second digital signal comprising synchronisation information, bitallocation information, scalefactor information and audio signal information included in subsequent frames of the second digital signal,
- second conversion means (15) for converting the second digital signal into a third digital signal so as to enable an error correction to be carried out in the reproducing arrangement on the third digital signal read from the track,
- write means (16) for writing the third digital signal in the track on the record carrier, the recording arrangement further comprising signal processing means (51,53,54) for further processing the digital signal in response to and directly preceding the termination of a recording mode, so as to mutilate information included in a terminal portion of the third digital signal which is to be recorded in the track, the information included in the terminal portion being mutilated such that, during reproduction in a reproduction arrangement which is provided with concealment means for concealing uncorrectable errors present in the third digital signal upon reproduction, the mutilated information included in the terminal portion of the signal read from the track, results in generating a concealment control signal during a second time interval which is applied to the concealment means so as to conceal the digital signal during said second time interval, the said second time interval at least including the time of reproduction of the terminal portion of the reproduced digital signal.

9. A recording arrangement for recording a digital audio signal in a track on a re-recordable record carrier (21), comprising
- an input terminal (1) for receiving the digital audio signal,
- first conversion means (14) for converting the digital audio signal in a data reduction step into a second digital signal comprising synchronisation information, bitallocation information, scalefactor information and audio signal information included in subsequent frames of the second digital signal,
- second conversion means (15) for converting the second digital signal into a third digital signal so as to enable an error correction to be carried out in the reproducing arrangement on the third digital signal read from the track,
- a signal source (70) for generating an auxiliary signal,
- write means (16) for writing the third digital signal in the track on the record carrier and for writing the auxiliary signal in an auxiliary track on the record carrier, the recording arrangement further comprising signal processing means (51,71,72) for further processing the auxiliary signal in the recording arrangement in response to the switching of the recording arrangement into a recording mode, so as to add at least one concealment code to a start portion of the auxiliary signal which is to be recorded in the auxiliary track, such that, during reproduction in a reproduction arrangement which is provided with detector means (75) for detecting the at least one concealment code in the auxiliary signal read from the track, a concealment control signal is generated during a first time interval in response to the at least one concealment code detected and for supplying the concealment control signal to the concealment means so as to conceal the digital signal during said first time interval, the said first time interval at least including the time of reproduction of the start portion of the reproducing digital signal.

10. A recording arrangement for recording a digital audio signal on a re-recordable record carrier (21), comprising
- an input terminal (1) for receiving the digital audio signal,
- first conversion means (14) for converting the digital audio signal in a data reduction step into a second digital signal comprising synchronisation information, bitallocation information, scalefactor information and audio signal information included in subsequent frames of the second digital signal,
- second conversion means (15) for converting the second digital signal into a third digital signal so as to enable an error correction to be carried out in the reproducing arrangement on the third digital signal read from the track,
- a signal source (70) for generating an auxiliary signal,
- write means (16) for writing the third digital signal in the track on the record carrier and for writing the auxiliary signal in an auxiliary track on the record carrier, the recording arrangement further comprising signal processing means (51,71,72) for further processing the auxiliary signal in response to and directly preceding the termination of a recording mode, so as to add at least one concealment code to a terminal portion of the auxiliary signal which is recorded in the auxiliary track, such that upon reproduction in a reproducing arrangement comprising detector means (75) for detecting the at least one concealment code in the auxiliary signal read from the track, for generating a concealment control signal during a second time interval in response to the at least one concealment code detected and for supplying the concealment control signal to the concealment means so as to conceal the digital signal during said second time interval, the said second time interval at least including the time of reproduction of the terminal portion of the reproduced digital signal.

11. Recording arrangement as claimed in Claim 7 or 8 the signal processing means comprising scrambling means (50) for scrambling at least a part of the start portion of the third digital signal.

12. Recording arrangement as claimed in Claim 11, where dependent of claim 8, the scrambling means being further adapted to scramble at least a part of the terminal portion of the third digital signal.

13. Recording arrangement as claimed in Claim 11, the second conversion mean 15 being adapted to add parity information to the second digital signal, the signal processing means being adapted to mutilate parity information included in the start portion of the third digital signal.

14. Recording arrangement as claimed in Claim 13, the signal processing means further being adapted to mutilate parity information included in the terminal portion of the third digital signal.

15. Recording arrangement as claimed in Claim 7, 8, 9 or 10 the signal processing means comprise signal combining means (72) for additionally adding concealment codes to the auxiliary signal or to the second or third digital signal.

16. Re-recordable record carrier obtained with the recording arrangement as claimed in claim 15, when dependent of claim 9 or 10, having a digital signal and an auxiliary signal recorded on it in tracks on said record carrier, a concealment code being added to a start portion or a terminal portion of the auxiliary signal, as recorded on the track.

17. A reproducing arrangement for reproducing a digital audio signal from a re-recordable record carrier (21), comprising
- read means (30) for reading a digital signal from the track on the record carrier,
- first conversion means (32) for correcting errors in the digital signal read from the track, for generating an error-flag if it is not capable of correcting an error, and for reconvening the digital signal into a second digital signal,
- second conversion means (35,36) for reconvening the second digital signal so as to obtain the digital audio signal,
- concealment means (43) for concealing uncorrectable errors in the digital audio signal in response to error flags generated by the first conversion means,
- an output terminal (40) for supplying the digital audio signal, the reproducing arrangement further comprising detector means (75) for detecting a concealment code present in the signal read from the track, for generating a concealment control signal in response to the concealment code detected and for supplying the concealment control signal to the concealment means, the concealment means also being adapted to conceal the digital signal during a specific time interval in response to said concealment control signal, in order to conceal an audible distortion that otherwise may occur in response to a reproduction over a boundary between an earlier and a new recording of the digital signal on the record carrier.

18. A reproducing arrangement for reproducing a digital audio signal and an auxiliary signal from a re-recordable record carrier (21), comprising
- read means (30) for reading the digital signal from a track on the record carrier and for reading the auxiliary signal from an auxiliary track on said record carrier,
- first conversion means (32) for correcting errors in the digital signal read from the track, for generating an error-flag if it is not capable of correcting an error, and for reconverting the digital signal into a second digital signal,
- second conversion means (35,36) for reconverting the second digital signal so as to obtain the digital audio signal,
- concealment means (43) for concealing uncorrectable errors in the digital audio signal in response to error flags generated by the first conversion means,
- an output terminal (40) for supplying the digital audio signal, the reproducing arrangement further comprising detector means for detecting a concealment code present in the auxiliary signal read from the auxiliary track, for generating a concealment control signal during a specific time interval in response to the concealment code detected and for supplying the concealment control signal to the concealment means so as to conceal the digital audio signal during said specific time interval.

## Patentansprüche

1. System zum Aufzeichnen und Wiedergeben eines digitalen Audiosignals auf/von einem neu-aufzeichenbaren Aufzeichnungsträger (21) mit einer Aufzeichnungsinrichtung (14, 15, 16) zum Aufzeichnen des digitalen Audiosignals in einer Spur auf dem Aufzeichnungsträger und mit einer Wiedergabeeinrichtung (30, 32, 35, 36) zum Wiedergeben des digitalen Audiosignals aus der Spur des Aufzeichnungsträgers,
wobei die Aufzeichnungseinrichtung die nachfolgenden Elemente aufweist:
- eine Eingangsklemme (1) zum Empfangen des digitalen Audiosignals,
- erste Umwandlungsmittel (14) zum in einem Datenreduktionsschritt Umwandeln des digitalen Audiosignals in ein zweites digitales Signal mit Synchronisationsinformation, Bitstelleninformation, Skalierungsfaktorinformation und Audiosignalinformation in aufeinanderfolgenden Frames des zweiten digitalen Signals,
- zweite Umwandlungsmittel (15) zum Umwandeln des zweiten digitalen Signals in ein drittes digitales Signal um eine Fehlerkorrektur zu ermöglichen, die in der Wiedergabeeinrichtung an dem aus der Spur ausgelesenen dritten digitalen Signal durchgeführt wird,
- Schreibmittel (16) zum Einschreiben des dritten digitalen Signals in die Spur auf dem Aufzeichnungsträger,
wobei die Wiedergabeeinrichtung die nachfolgenden Elemente aufweist:
- Auslesemittel (30) zum Auslesen des dritten digitalen Signals aus der Spur auf dem Aufzeichnungsträger,
- dritte Umwandlungsmittel (32) zum Korrigieren von Fehlern in dem aus der Spur ausgelesenen dritten digitalen Signal, zum Erzeugen eines Fehlermerkers, wenn die Einrichtung nicht imstande ist, den Fehler zu korrigieren, und zum Zurückverwandeln des dritten digitalen Signals in das zweite digitale Signal,
- vierte Umwandlungsmittel (35, 36) zum Zurückverwandeln des zweiten digitalen Signals zum Erhalten des digitalen Audiosignals,
- Versteckmittel (43) zum Verstecken nicht korrigierbarer Fehler in dem digitalen Audiosignal in Reaktion auf Fehlermerker, die von den Fehlerkorrekturmitteln erzeugt wurden,
- eine Ausgangsklemme (40) zum Liefern des digitalen Audiosignals,
wobei die Aufzeichnungseinrichtung weiterhin Signalverarbeitungsmittel (51, 53, 54) aufweist zur weiteren Verarbeitung eines digitalen Signals in der Aufzeichnungseinrichtung in Reaktion auf die Umschaltung der Aufzeichnungseinrichtung in eine Aufzeichnungsbetriebsart, zum Verstümmeln von Information in einem Startteil des in der Spur aufzuzeichnenden dritten digitalen Signals wobei die Information in dem Startteil derart verstümmelt wird, dass bei der Wiedergabe die verstümmelte Information in dem Startteil des aus der Spur ausgelesenen Signals zu der Erzeugung eines Verstecksteuersignals während eines ersten Zeitintervalls führt, das den Versteckmitteln zugeführt wird zum Verstecken des digitalen Signals während des genannten ersten Zeitintervalls, wobei das genannte erste Zeitintervall wenigstens die Wiedergabezeit des Startteils des wiedergegebenen digitalen Signals umfasst.

2. System zum Aufzeichnen und Wiedergeben eines digitalen Audiosignals auf/von einem neu-aufzeichenbaren Aufzeichnungsträger (21), mit einer Aufzeichnungseinrichtung (14, 15, 16) zum Aufzeichnen des digitalen Audiosignals in einer Spur auf dem Aufzeichnungsträger und mit einer Wiedergabeeinrichtung (30, 32, 35, 36) zum Wiedergeben des digitalen Audiosignals aus der Spur des Aufzeichnungsträgers,
wobei die Aufzeichnungseinrichtung die nachfolgenden Elemente aufweist:
- eine Eingangsklemme (1) zum Empfangen des digitalen Audiosignals,
- erste Umwandlungsmittel (14) zum in einem Datenreduktionsschritt Umwandeln des digitalen Audiosignals in ein zweites digitales Signal mit Synchronisationsinformation, Bitstelleninformation, Skalierungsfaktorinformation und Audiosignalinformation in aufeinanderfolgenden Frames des zweiten digitalen Signals,
- zweite Umwandlungsmittel (15) zum Umwandeln des zweiten digitalen Signals in ein drittes digitales Signal um eine Fehlerkorrektur zu ermöglichen, die in der Wiedergabeeinrichtung an dem aus der Spur ausgelesenen dritten digitalen Signal durchgeführt wird,
- Schreibmittel (16) zum Einschreiben des dritten digitalen Signals in die Spur auf dem Aufzeichnungsträger, wobei die Wiedergabeeinrichtung die nachfolgenden Elemente aufweist:
- Auslesemittel (30) zum Auslesen des dritten digitalen Signals aus der Spur auf dem Aufzeichnungsträger,
- dritte Umwandlungsmittel (32) zum Korrigieren von Fehlern in dem aus der Spur ausgelesenen dritten digitalen Signal, zum Erzeugen eines Fehlermerkers, wenn die Einrichtung nicht imstande ist, den Fehler zu korrigieren, und zum Zurückverwandeln des dritten digitalen Signals in das zweite digitale Signal,
- vierte Umwandlungsmittel (35, 36) zum Zurückverwandeln des zweiten digitalen Signals zum Erhalten des digitalen Audiosignals,
- Versteckmittel (43) zum Verstecken nicht korrigierbarer Fehler in dem digitalen Audiosignal in Reaktion auf Fehlermerker, die von den Fehlerkorrekturmitteln erzeugt wurden,
- eine Ausgangsklemme (40) zum Liefern des digitalen Audiosignals,
wobei die Aufzeichnungseinrichtung weiterhin Signalverarbeitungsmittel (51, 53, 54) aufweist zur weiteren Verarbeitung eines digitalen Signals in der Aufzeichnungseinrichtung in Reaktion auf die Umschaltung der Aufzeichnungseinrichtung in eine Aufzeichnungsbetriebsart, zum Verstümmeln von Information in einem Startteil des in der Spur aufzuzeichnenden dritten digitalen Signals wobei die Information in dem Startteil derart verstümmelt wird, dass bei der Wiedergabe die verstümmelte Information in dem Startteil des aus der Spur ausgelesenen Signals zu der Erzeugung eines Verstecksteuersignals während eines ersten Zeitintervalls führt, das den Versteckmitteln zugeführt wird zum Verstecken des digitalen Signals während des genannten ersten Zeitintervalls, wobei das genannte erste Zeitintervall wenigstens die Wiedergabezeit des Startteils des wiedergegebenen digitalen Signals umfasst.

3. System zum Aufzeichnen und Wiedergeben eines digitalen Audiosignals auf/von einem neu-aufzeichenbaren Aufzeichnungsträger (21) mit einer Aufzeichnungseinrichtung (14, 15, 16) zum Aufzeichnen des digitalen Audiosignals in einer Spur auf dem Aufzeichnungsträger und mit einer Wiedergabeeinrichtung (30, 32, 35, 36)) zum Wiedergeben des digitalen Audiosignals aus der Spur des Aufzeichnungsträgers,
wobei die Aufzeichnungseinrichtung die nachfolgenden Elemente aufweist:
- eine Eingangsklemme (1) zum Empfangen des digitalen Audiosignals,
- erste Umwandlungsmittel (14) zum in einem Datenreduktionsschritt Umwandeln des digitalen Audiosignals in ein zweites digitales Signal mit Synchronisationsinformation, Bitstelleninformation, Skalierungsfaktorinformation und Audiosignalinformation in aufeinanderfolgenden Frames des zweiten digitalen Signals,
- zweite Umwandlungsmittel (15) zum Umwandeln des zweiten digitalen Signals in ein drittes digitales Signal um eine Fehlerkorrektur zu ermöglichen, die in der Wiedergabeeinrichtung an dem aus der Spur ausgelesenen dritten digitalen Signal durchgeführt wird,
- eine Signalquelle (70) zum Erzeugen eines Hilfssignals,
- Schreibmittel (16) zum Einschreiben des dritten digitalen Signals in die Spur auf dem Aufzeichnungsträger und zum Einschreiben des Hilfssignals in eine Hilfsspur auf dem Aufzeichnungsträger,
wobei die Wiedergabeeinrichtung die nachfolgenden Elemente aufweist:
- Auslesemittel (30) zum Auslesen des dritten digitalen Signals aus der Spur auf dem Aufzeichnungsträger und zum Auslesen des Hilfssignals aus der Hilfsspur auf dem Aufzeichnungsträger,
- dritte Umwandlungsmittel (32) zum Korrigieren von Fehlern in dem aus der Spur ausgelesenen dritten digitalen Signal, zum Erzeugen eines Fehlermerkers, wenn die Einrichtung nicht imstande ist, einen Fehler zu korrigieren, und zum Zurückverwandeln des dritten digitalen Signals in das zweite digitale Signal,
- vierte Umwandlungsmittel (35, 36) zum Zurückverwandeln des zweiten digitalen Signals zum Erhalten des digitalen Audiosignals,
- Versteckmittel (43) zum Verstecken nicht korrigierbarer Fehler in dem digitalen Audiosignal in Reaktion auf Fehlermerker, die von den Fehlerkorrekturmitteln erzeugt wurden,
- eine Ausgangsklemme (40) zum Liefern des digitalen Audiosignals,
wobei die Aufzeichnungseinrichtung weiterhin Signalverarbeitungsmittel (51, 71,72) aufweist zur weiteren Verarbeitung des Hilfssignals in der Aufzeichnungseinrichtung in Reaktion auf die Umschaltung der Aufzeichnungseinrichtung in eine Aufzeichnungsbetriebsart, zum Hinzufügen wenigstens eines Versteckcodes zu einem Startteil des in der Hilfsspur aufzuzeichnenden Hilfssignals, wobei die Wiedergabeeinrichtung weiterhin Detektormittel (75) aufweist zum Detektieren des wenigstens einen Versteckcodes in dem aus der Spur ausgelesenen Hilfssignal, zum Erzeugen eines Verstecksteuersignals während eines ersten Zeitintervalls in Reaktion auf den wenigstens einen Versteckcode und zum Liefern des Verstecksteuersignals zu den Versteckmitteln zum Verstecken des digitalen Signals während des genannten ersten Zeitintervalls, wobei das genannte erste Zeitintervall wenigstens die Wiedergabezeit des Startteils des wiedergegebenen digitalen Signals aufweist.

4. System zum Aufzeichnen und Wiedergeben eines digitalen Audiosignals auf/von einem neu-aufzeichenbaren Aufzeichnungsträger (21)) mit einer Aufzeichnungseinrichtung (14, 15, 16) zum Aufzeichnen des digitalen Audiosignals in einer Spur auf dem Aufzeichnungsträger und mit einer Wiedergabeeinrichtung (30, 32, 35, 36) zum Wiedergeben des digitalen Audiosignals aus der Spur des Aufzeichnungsträgers,
wobei die Aufzeichnungseinrichtung die nachfolgenden Elemente aufweist:
- eine Eingangsklemme (1) zum Empfangen des digitalen Audiosignals,
- erste Umwandlungsmittel (14) zum in einem Datenreduktionsschritt Umwandeln des digitalen Audiosignals in ein zweites digitales Signal mit Synchronisationsinformation, Bitstelleninformation, Skalierungsfaktorinformation und Audiosignalinformation in aufeinanderfolgenden Frames des zweiten digitalen Signals,
- zweite Umwandlungsmittel (15) zum Umwandeln des zweiten digitalen Signals in ein drittes digitales Signal um eine Fehlerkorrektur zu ermöglichen, die in der Wiedergabeeinrichtung an dem aus der Spur ausgelesenen dritten digitalen Signal durchgeführt wird,
- eine Signalquelle (70) zum Erzeugen eines Hilfssignals,
- Schreibmittel (16) zum Einschreiben des dritten digitalen Signals in die Spur auf dem Aufzeichnungsträger und zum Einschreiben des Hilfssignals in eine Hilfsspur auf dem Aufzeichnungsträger,
wobei die Wiedergabeeinrichtung die nachfolgenden Elemente aufweist:
- Auslesemittel (30) zum Auslesen des dritten digitalen Signals aus der Spur auf dem Aufzeichnungsträger und zum Auslesen des Hilfssignals aus der Hilfsspur auf dem Aufzeichnungsträger,
- dritte Umwandlungsmittel (32) zum Korrigieren von Fehlern in dem aus der Spur ausgelesenen dritten digitalen Signal, zum Erzeugen eines Fehlermerkers, wenn die Einrichtung nicht imstande ist, einen Fehler zu korrigieren, und zum Zurückverwandeln des dritten digitalen Signals in das zweite digitale Signal,
- vierte Umwandlungsmittel (35, 36) zum Zurückverwandeln des zweiten digitalen Signals zum Erhalten des digitalen Audiosignals,
- Versteckmittel (43) zum Verstecken nicht korrigierbarer Fehler in dem digitalen Audiosignal in Reaktion auf Fehlermerker, die von den Fehlerkorrekturmitteln erzeugt wurden,
- eine Ausgangsklemme (40) zum Liefern des digitalen Audiosignals,
wobei die Aufzeichnungseinrichtung weiterhin Signalverarbeitungsmittel (51, 71, 72) aufweist zur weiteren Verarbeitung des Hilfssignals in der Aufzeichnungseinrichtung in Reaktion auf und unmittelbar vor der Beendigung einer Aufzeichnungsbetriebsart, zum Hinzufügen wenigstens eines Versteckcodes zu einem Endteil des in der Hilfsspur aufzuzeichnenden Hilfssignals, wobei die Wiedergabeeinrichtung weiterhin Detektormittel (75) aufweist zum Detektieren des wenigstens einen Versteckcodes in dem aus der Spur ausgelesenen Hilfssignal, zum Erzeugen eines Verstecksteuersignals während eines zweiten Zeitintervalls in Reaktion auf den wenigstens einen detektierten Versteckcode und zum Liefern des Verstecksteuersignals zu den Versteckmitteln zum Verstecken des digitalen Signals während des genannten zweiten Zeitintervalls, wobei das genannte zweite Zeitintervall wenigstens die Wiedergabezeit des Endteils des wiedergegebenen digitalen Signals aufweist.

5. System nach Anspruch 1 oder nach Anspruch 1 und 2, wobei die Signalverarbeitungsmittel Signalkombiniermittel (72) aufweisen zum zusätzlichen Hinzufügen wenigstens eines Versteckcodes (CC) zu dem Startteil des zweiten oder dritten digitalen Signals, wobei die Wiedergabeanordnung weiterhin Detektormittel (75) aufweist zum Detektieren des wenigstens einen Versteckcodes in dem aus der Spur ausgelesenen zweiten oder dritten digitalen Signal und zum Erzeugen des Verstecksteuersignals während des genannten ersten Zeitintervalls in Reaktion auf den wenigstens einen detektierten Versteckcode.

6. System nach Anspruch 2 oder nach Anspruch 1 und 2, wobei die Signalverarbeitungsmittel Signalkombiniermittel (72) aufweisen zum zusätzlichen Hinzufügen wenigstens eines Versteckcodes (CC) zu dem Endteil des zweiten oder dritten digitalen Signals, wobei die Wiedergabeeinrichtung weiterhin Detektormittel (75) aufweist zum Detektieren des wenigstens einen Versteckcodes in dem ausgelesenen zweiten oder dritten digitalen Signal.

7. Aufzeichnungseinrichtung zum Aufzeichnen eines digitalen Audiosignals auf einem neu-aufzeichenbaren Aufzeichnungsträger (21), wobei diese Aufzeichnungseinrichtung die nachfolgenden Elemente aufweist:
- eine Eingangsklemme (1) zum Empfangen des digitalen Audiosignals,
- erste Umwandlungsmittel (14) zum in einem Datenreduktionsschritt Umwandeln des digitalen Audiosignals in ein zweites digitales Signal mit Synchronisationsinformation, Bitstelleninformation, Skalierungsfaktorinformation und Audiosignalinformation in aufeinanderfolgenden Frames des zweiten digitalen Signals,
- zweite Umwandlungsmittel (15) zum Umwandeln des zweiten digitalen Signals in ein drittes digitales Signal um eine Fehlerkorrektur zu ermöglichen, die in der Wiedergabeeinrichtung an dem aus der Spur ausgelesenen dritten digitalen Signal durchgeführt wird,
- Schreibmittel (16) zum Einschreiben des dritten digitalen Signals in die Spur auf dem Aufzeichnungsträger,
wobei die Aufzeichnungseinrichtung weiterhin Signalverarbeitungsmittel (51, 53, 54) aufweist zur Weiterverarbeitung des digitalen Signals in Reaktion auf die Umschaltung der Aufzeichnungseinrichtung in eine Aufzeichnungsbetriebsart, zum Verstümmeln von Information in einem Startteil des in der Spur aufzuzeichnenden dritten digitalen Signals, wobei die Information in dem Startteil derart verstümmelt wird, dass während der Wiedergabe in einer Wiedergabeeinrichtung, die mit Versteckmitteln versehen ist zum bei der Wiedergabe Verstecken nicht korrigierbarer Fehler in dem dritten digitalen Signal die verstümmelte Information in dem Startteil des aus der Spur ausgelesenen Signals zu der Erzeugung eines Verstecksteuersignals während eines ersten Zeitintervalls führt, wobei dieses Signal den Versteckmitteln zugeführt wird, zum Verstecken des digitalen Signals während des genannten ersten Zeitintervalls, wobei das genannte erste Zeitintervall wenigstens die Wiedergabezeit des Startteils des wiedergegebenen digitalen Signals aufweist.

8. Aufzeichnungseinrichtung zum Aufzeichnen des digitalen Audiosignals in einer Spur auf einem neu-aufzeichenbaren Aufzeichnungsträger (21), wobei diese Einrichtung die nachfolgenden Elemente aufweist:
- eine Eingangsklemme (1) zum Empfangen des digitalen Audiosignals,
- erste Umwandlungsmittel (14) zum in einem Datenreduktionsschritt Umwandeln des digitalen Audiosignals in ein zweites digitales Signal mit Synchronisationsinformation, Bitstelleninformation, Skalierungsfaktorinformation und Audiosignalinformation in aufeinanderfolgenden Frames des zweiten digitalen Signals,
- zweite Umwandlungsmittel (15) zum Umwandeln des zweiten digitalen Signals in ein drittes digitales Signal um eine Fehlerkorrektur zu ermöglichen, die in der Wiedergabeeinrichtung an dem aus der Spur ausgelesenen dritten digitalen Signal durchgeführt wird,
- Schreibmittel (16) zum Einschreiben des dritten digitalen Signals in die Spur auf dem Aufzeichnungsträger,
wobei die Aufzeichnungseinrichtung weiterhin Signalverarbeitungsmittel (51, 53, 54) aufweist zur weiteren Verarbeitung des digitalen Signals in Reaktion auf und unmittelbar vor der Beendigung einer Aufzeichnungsbetriebsart, zum Verstümmeln von Information in einem Endteil des in der Spur aufzuzeichnenden dritten digitalen Signals, wobei die Information in dem Endteil derart verstümmelt wird, dass während der Wiedergabe in einer Wiedergabeeinrichtung, die mit Versteckmitteln versehen ist zum bei der Wiedergabe Verstecken nicht korrigierbarer Fehler in dem dritten digitalen Signal die verstümmelte Information in dem Endteil des aus der Spur ausgelesenen Signals zu der Erzeugung eines Verstecksteuersignals während eines zweiten Zeitintervalls führt, wobei dieses Signal den Versteckmitteln zugeführt wird, zum Verstecken des digitalen Signals während des genannten zweiten Zeitintervalls, wobei das genannte zweite Zeitintervall wenigstens die Wiedergabezeit des Endteils des wiedergegebenen digitalen Signals aufweist.

9. Wiedergabeeinrichtung zum Wiedergeben eines digitalen Audiosignals in einer Spur auf einem neu-aufzeichenbaren Aufzeichnungsträger (21), wobei diese Einrichtung die nachfolgenden Elemente aufweist:
- eine Eingangsklemme (1) zum Empfangen des digitalen Audiosignals,
- erste Umwandlungsmittel (14) zum in einem Datenreduktionsschritt Umwandeln des digitalen Audiosignals in ein zweites digitales Signal mit Synchronisationsinformation, Bitstelleninformation, Skalierungsfaktorinformation und Audiosignalinformation in aufeinanderfolgenden Frames des zweiten digitalen Signals,
- zweite Umwandlungsmittel (15) zum Umwandeln des zweiten digitalen Signals in ein drittes digitales Signal um eine Fehlerkorrektur zu ermöglichen, die in der Wiedergabeeinrichtung an dem aus der Spur ausgelesenen dritten digitalen Signal durchgeführt wird,
- eine Signalquelle (70) zum Erzeugen eines Hilfssignals,
- Schreibmittel (16) zum Einschreiben des dritten digitalen Signals in die Spur auf dem Aufzeichnungsträger und zum Einschreiben des Hilfssignals in eine Hilfsspur auf dem Aufzeichnungsträger,
wobei die Aufzeichnungseinrichtung weiterhin Signalverarbeitungsmittel (51, 71,72) aufweist zur weiteren Verarbeitung des Hilfssignals in der Aufzeichnungseinrichtung in Reaktion auf die Umschaltung der Aufzeichnungseinrichtung in eine Aufzeichnungsbetriebsart, zum Hinzufügen wenigstens eines Versteckcodes zu einem Startteil des in der Hilfsspur aufzuzeichnenden Hilfssignals, so dass bei der Wiedergabe in einer Wiedergabeeinrichtung, die mit Detektormitteln (75) versehen ist zum Detektieren des wenigstens einen Versteckcodes in dem aus der Spur ausgelesenen Hilfssignal, während eines ersten Zeitintervalls in Reaktion auf den wenigstens einen detektierten Versteckcode ein Verstecksteuersignal erzeugt wird und zum Zuführen des Verstecksteuersignals zu den Versteckmitteln zum verstecken des digitalen Signals während des genannten ersten Zeitintervalls, wobei dieses erste Zeitintervall wenigstens die Wiedergabezeit des Startteils des wiedergegebenen digitalen Signals aufweist.

10. Aufzeichnungseinrichtung zum Aufzeichnen eines digitalen Audiosignals auf/von einem neu-aufzeichenbaren Aufzeichnungsträger (21), wobei die Aufzeichnungseinrichtung die nachfolgenden Elemente aufweist:
- eine Eingangsklemme (1) zum Empfangen des digitalen Audiosignals,
- erste Umwandlungsmittel (14) zum in einem Datenreduktionsschritt Umwandeln des digitalen Audiosignals in ein zweites digitales Signal mit Synchronisationsinformation, Bitstelleninformation, Skalierungsfaktorinformation und Audiosignalinformation in aufeinanderfolgenden Frames des zweiten digitalen Signals,
- zweite Umwandlungsmittel (15) zum Umwandeln des zweiten digitalen Signals in ein drittes digitales Signal um eine Fehlerkorrektur zu ermöglichen, die in der Wiedergabeeinrichtung an dem aus der Spur ausgelesenen dritten digitalen Signal durchgeführt wird,
- eine Signalquelle (70) zum Erzeugen eines Hilfssignals,
- Schreibmittel (16) zum Einschreiben des dritten digitalen Signals in die Spur auf dem Aufzeichnungsträger und zum Einschreiben des Hilfssignals in eine Hilfsspur auf dem Aufzeichnungsträger,
wobei die Aufzeichnungseinrichtung weiterhin Signalverarbeitungsmittel (51, 71, 72) aufweist zur weiteren Verarbeitung des Hilfssignals in Reaktion auf und unmittelbar vor der Beendigung einer Aufzeichnungsbetriebsart, zum Hinzufügen wenigstens eines Versteckcodes zu einem Endteil des in der Hilfsspur aufgezeichneten Hilfssignals, so dass bei der Wiedergabe in einer Wiedergabeeinrichtung, die mit Detektormitteln (75) versehen ist zum Detektieren des wenigstens einen Versteckcodes in dem aus der Spur ausgelesenen Hilfssignal, während eines zweiten Zeitintervalls in Reaktion auf den wenigstens einen detektierten Versteckcode ein Verstecksteuersignal erzeugt wird und zum Zuführen des Verstecksteuersignals zu den Versteckmitteln zum Verstecken des digitalen Signals während des genannten zweiten Zeitintervalls, wobei dieses zweite Zeitintervall wenigstens die Wiedergabezeit des Endteils des wiedergegebenen digitalen Signals aufweist.

11. Aufzeichnungseinrichtung nach Anspruch 7 oder 8, wobei die Signalverarbeitungsmittel Verwürfelungsmittel (50) aufweisen zum verwürfen wenigstens eines Teils des Startteils des dritten digitalen Signals.

12. Aufzeichnungseinrichtung nach Anspruch 11, insofern abhängig von Anspruch 8, wobei die Verwürfelungsmittel weiterhin wenigstens einen Teil des Endteils des dritten digitalen Signals verwürfeln.

13. Aufzeichnungseinrichtung nach Anspruch 11, wobei die zweiten Umwandlungsmittel (15) dem zweiten digitalen Signal Paritätsinformation zufügen, wobei die Signalverarbeitungsmittel Paritätsinformation in dem Startteil des dritten digitalen Signals verstümmeln.

14. Aufzeichnungseinrichtung nach Anspruch 13, wobei die Signalverarbeitungsmittel weiterhin Paritätsinformation in dem Endteil des dritten digitalen Signals verstümmeln.

15. Aufzeichnungseinrichtung nach Anspruch 7, 8, 9 oder 10, wobei die Signalverarbeitungsmittel Signalkombiniermittel (72) aufweisen zur zustäzlichen Hinzufügung von Versteckcodes zu dem Hilfssignal oder zu dem zweiten oder dritten digitalen Signal.

16. Neu-aufzeichenbarer Aufzeichnungsträger, erhalten mit der Aufzeichnungseinrichtung nach Anspruch 15, insofern abhängig von Anspruch 9 oder 10, mit einem digitalen Signal und einem Hilfssignal in Spuren auf dem genannten Aufzeichnungsträger aufgezeichnet, wobei bei der Aufzeichnung in der Spur einem Startteil oder einem Endteil des Hilfssignals ein Versteckcode zugefügt ist.

17. Wiedergabeeinrichtung zum Wiedergeben eines digitalen Audiosignals von einem neu-aufzeichenbaren Aufzeichnungsträger (21), wobei diese Einrichtung die nachfolgenden Elemente aufweist:
- Auslesemittel (30) zum Auslesen eines digitalen Signals aus der Spur auf dem Aufzeichnungsträger,
- erste Umwandlungsmittel (32) zum Korrigieren von Fehlern in dem aus der Spur ausgelesenen digitalen Signal, zum Erzeugen eines Fehlermerkers, wenn die Einrichtung nicht imstande ist, den Fehler zu korrigieren, und zum Zurückverwandeln des digitalen Signals in ein zweites digitales Signal,
- zweite Umwandlungsmittel (35, 36) zum Zurückverwandeln des zweiten digitalen Signals zum Erhalten des digitalen Audiosignals,
- Versteckmittel (43) zum Verstecken nicht korrigierbarer Fehler in dem digitalen Audiosignal in Reaktion auf Fehlermerker, die von den ersten Umwandlungsmitteln erzeugt wurden,
- eine Ausgangsklemme (40) zum Liefern des digitalen Audiosignals,
wobei die Wiedergabeeinrichtung weiterhin Detektormittel (75) aufweist zum Detektieren eines Versteckcodes in dem aus der Spur ausgelesenen Signal, zum Erzeugen eines Verstecksteuersignals in Reaktion auf den detektierten Versteckcode und zum Liefern des Verstecksteuersignals zu den Versteckmitteln, wobei die Versteckmittel ebenfalls das digitale Signal während eines spezifischen Zeitintervalls in Reaktion auf das genannte Verstecksteuersignal verstecken um eine hörbare Verzerrung zu verstecken, die sonst in Reaktion auf eine Wiedergabe auftreten kann an einer Begrenzung zwischen einer früheren und einer neuen Aufzeichnung des digitalen Signals auf dem Aufzeichnungsträger.

18. Wiedergabeeinrichtung zum Wiedergeben eines digitalen Audiosignals und eines Hilfssignals von einem neu-aufzeichenbaren Aufzeichnungsträger (21), wobei diese Wiedergabeeinrichtung die nachfolgenden Elemente aufweist:
- Auslesemittel (30) zum Auslesen des digitalen Signals aus einer Spur auf dem Aufzeichnungsträger und zum Auslesen des Hilfssignals aus einer Hilfsspur auf dem genannten Aufzeichnungsträger,
- erste Umwandlungsmittel (32) zum Korrigieren von Fehlern in dem aus der Spur ausgelesenen digitalen Signal, zum Erzeugen eines Fehlermerkers, wenn die Einrichtung nicht imstande ist, den Fehler zu korrigieren, und zum Zurückverwandeln des digitalen Signals in ein zweites digitales Signal,
- zweite Umwandlungsmittel (35, 36) zum Zurückverwandeln des zweiten digitalen Signals zum Erhalten des digitalen Audiosignals,
- Versteckmittel (43) zum Verstecken nicht korrigierbarer Fehler in dem digitalen Audiosignal in Reaktion auf Fehlermerker, die von den ersten Umwandlungsmitteln erzeugt wurden,
- eine Ausgangsklemme (40) zum Liefern des digitalen Audiosignals, wobei die Wiedergabeeinrichtung weiterhin Detektormittel aufweist zum Detektieren eines Versteckcodes in dem aus der Hilfsspur ausgelesenen Signal, zum Erzeugen eines Verstecksteuersignals während eines spezifischen Zeitintervalls in Reaktion auf den detektierten Versteckcode und zum Liefern des Verstecksteuersignals zu den Versteckmitteln, zum Verstecken des digitalen Audiosignals während des genannten spezifischen Zeitintervalls.

## Revendications

1. Système d'enregistrement et de reproduction d'un signal audio numérique sur/depuis un support d'enregistrement réenregistrable (21), comprenant un montage d'enregistrement (14, 15, 16) pour enregistrer le signal audio numérique sur une piste du support d'enregistrement et comprenant un montage de reproduction (30, 32, 35, 36) pour reproduire le signal audio numérique depuis la piste du support d'enregistrement, le montage d'enregistrement comprenant
- une borne d'entrée (1) pour recevoir le signal audio numérique,
- des premiers moyens de conversion (14) pour convertir le signal audio numérique dans une étape de réduction de données en un deuxième signal numérique comprenant des informations de synchronisation, des informations d'attribution de bits, des informations de facteur d'échelle et des informations de signal audio contenues dans des trames suivantes du deuxième signal numérique,
- des deuxièmes moyens de conversion (15) pour convertir le deuxième signal audio numérique en un troisième signal numérique de manière à permettre la réalisation d'une correction d'erreurs dans le montage de reproduction sur le troisième signal numérique lu sur la piste,
- des moyens d'écriture (16) pour écrire le troisième signal numérique sur la piste du support d'enregistrement, le montage de reproduction comprenant
- des moyens de lecture (30) pour lire le troisième signal numérique sur la piste du support d'enregistrement,
- des troisièmes moyens de conversion (32) pour corriger les erreurs dans le troisième signal numérique lu sur la piste, pour produire un drapeau d'erreurs s'ils ne sont pas capables de corriger une erreur, et pour reconvertir le troisième signal numérique en le deuxième signal numérique,
- des quatrièmes moyens de conversion (35, 36) pour reconvertir le deuxième signal numérique de manière à obtenir le signal audio numérique,
- des moyens de masquage (43) pour masquer des erreurs impossibles à corriger dans le signal audio numérique en réaction aux drapeaux d'erreurs produits par les moyens de correction d'erreurs,
- une borne de sortie (40) pour fournir le signal audio numérique,
le montage d'enregistrement comprenant en outre des moyens de traitement de signaux (51, 53, 54) pour traiter plus avant un signal numérique dans le montage d'enregistrement en réaction à la commutation du montage d'enregistrement en mode d'enregistrement, de manière à mutiler l'information contenue dans la partie initiale du troisième signal numérique qui doit être enregistré sur la piste, l'information contenue dans la partie initiale étant mutilée de telle manière que, durant la reproduction, l'information mutilée contenue dans la partie initiale du signal lu sur la piste, entraîne la production d'un signal de commande de masquage pendant un premier intervalle de temps qui est appliqué aux moyens de masquage de manière à masquer le signal numérique pendant ledit premier intervalle de temps, ledit premier intervalle de temps comprenant au moins le temps de reproduction de la partie initiale du signal numérique reproduit.

2. Système d'enregistrement et de reproduction d'un signal audio numérique sur/depuis un support d'enregistrement réenregistrable (21), comprenant un montage d'enregistrement (14, 15, 16) pour enregistrer le signal audio numérique sur une piste du support d'enregistrement et comprenant un montage de reproduction (30, 32, 35, 36) pour reproduire le signal audio numérique depuis la piste du support d'enregistrement, le montage d'enregistrement comprenant
- une borne d'entrée (1) pour recevoir le signal audio numérique,
- des premiers moyens de conversion (14) pour convertir le signal audio numérique dans une étape de réduction de données en un deuxième signal numérique comprenant des informations de synchronisation, des informations d' attribution de bits, des informations de facteur d'échelle et des informations de signal audio contenues dans des trames suivantes du deuxième signal numérique,
- des deuxièmes moyens de conversion (15) pour convertir le deuxième signal audio numérique en un troisième signal numérique de manière à permettre la réalisation d'une correction d'erreurs dans le montage de reproduction sur le troisième signal numérique lu sur la piste,
- des moyens d'écriture (16) pour écrire le troisième signal numérique sur la piste du support d'enregistrement, le montage de reproduction comprenant
- des moyens de lecture (30) pour lire le troisième signal numérique sur la piste du support d'enregistrement,
- des troisièmes moyens de conversion (32) pour corriger les erreurs dans le troisième signal numérique lu sur la piste, pour produire un drapeau d'erreurs s'ils ne sont pas capables de corriger une erreur, et pour reconvertir le troisième signal numérique en le deuxième signal numérique,
- des quatrièmes moyens de conversion (35, 36) pour reconvertir le deuxième signal numérique de manière à obtenir le signal audio numérique,
- des moyens de masquage (43) pour masquer des erreurs impossibles à corriger dans le signal audio numérique en réaction aux drapeaux d'erreurs produits par les moyens de correction d'erreurs,
- une borne de sortie (40) pour fournir le signal audio numérique,
le montage d'enregistrement comprenant en outre des moyens de traitement de signaux (51, 53, 54) pour traiter plus avant un signal numérique dans le montage d'enregistrement en réaction à et directement avant la fin d'un mode d'enregistrement, de manière à mutiler l'information contenue dans une partie terminale du troisième signal numérique qui doit être enregistré sur la piste, l'information contenue dans la partie terminale étant mutilée de telle sorte que, durant la reproduction, l'information mutilée contenue dans la partie terminale du signal lu sur la piste, entraîne la production d'un signal de commande de masquage pendant un deuxième intervalle de temps qui est appliqué aux moyens de masquage de manière à masquer le signal numérique pendant ledit deuxième intervalle de temps, ledit deuxième intervalle de temps comprenant au moins le temps de reproduction de la partie terminale du signal numérique reproduit.

3. Système d'enregistrement et de reproduction d'un signal audio numérique sur/depuis un support d'enregistrement réenregistrable (21), comprenant un montage d'enregistrement (14, 15, 16) pour enregistrer le signal audio numérique sur une piste du support d'enregistrement et comprenant un montage de reproduction (30, 32, 35, 36) pour reproduire le signal audio numérique depuis la piste du support d'enregistrement, le montage d'enregistrement comprenant
- une borne d'entrée (1) pour recevoir le signal audio numérique,
- des premiers moyens de conversion (14) pour convertir le signal audio numérique dans une étape de réduction de données en un deuxième signal numérique comprenant des informations de synchronisation, des informations d'attribution de bits, des informations de facteur d'échelle et des informations de signal audio contenues dans des trames suivantes du deuxième signal numérique,
- des deuxièmes moyens de conversion (15) pour convertir le deuxième signal numérique en un troisième signal numérique de manière à permettre la réalisation d'une correction d'erreurs dans le montage de reproduction sur le troisième signal numérique lu sur la piste,
- une source de signal (70) pour produire un signal auxiliaire,
- des moyens d'écriture (16) pour écrire le troisième signal numérique sur la piste du support d'enregistrement, et pour écrire le signal auxiliaire dans une piste auxiliaire du support d'enregistrement, le montage de reproduction comprenant
- des moyens de lecture (30) pour lire le troisième signal numérique sur la piste du support d'enregistrement, et pour lire le signal auxiliaire sur la piste auxiliaire du support d'enregistrement
- des troisièmes moyens de conversion (32) pour corriger les erreurs dans le troisième signal numérique lu sur la piste, pour produire un drapeau d'erreurs s'ils ne sont pas capables de corriger une erreur, et pour reconvertir le troisième signal numérique en le deuxième signal numérique,
- des quatrièmes moyens de conversion (35, 36) pour reconvertir le deuxième signal numérique de manière à obtenir le signal audio numérique,
- des moyens de masquage (43) pour masquer des erreurs impossibles à corriger dans le signal audio numérique en réaction aux drapeaux d'erreurs produits par les moyens de correction d'erreurs,
- une borne de sortie (40) pour fournir le signal audio numérique,
le montage d'enregistrement comprenant en outre des moyens de traitement de signaux (51, 71, 72) pour traiter plus avant le signal auxiliaire dans le montage d'enregistrement en réaction à la commutation du montage d'enregistrement en mode d'enregistrement, de manière à ajouter au moins un code de masquage à une partie initiale du signal auxiliaire qui doit être enregistré sur la piste auxiliaire, le montage de reproduction comprenant en outre des moyens de détection (75) pour détecter au moins un code de masquage dans le signal auxiliaire lu sur la piste, pour produire un signal de commande de masquage pendant un premier intervalle de temps en réaction à le au moins un code de masquage détecté et pour fournir le signal de commande de masquage aux moyens de masquage de manière à masquer le signal numérique pendant ledit premier intervalle de temps, ledit premier intervalle de temps comprenant au moins le temps de reproduction de la partie initiale du signal numérique reproduit.

4. Système d'enregistrement et de reproduction d'un signal audio numérique sur/depuis un support d'enregistrement réenregistrable (21), comprenant un montage d'enregistrement (14, 15, 16) pour enregistrer le signal audio numérique sur une piste du support d'enregistrement et comprenant un montage de reproduction (30, 32, 35, 36) pour reproduire le signal audio numérique depuis la piste du support d'enregistrement, le montage d'enregistrement comprenant
- une borne d'entrée (1) pour recevoir le signal audio numérique,
- des premiers moyens de conversion (14) pour convertir le signal audio numérique dans une étape de réduction de données en un deuxième signal numérique comprenant des informations de synchronisation, des informations d'attribution de bits, des informations de facteur d'échelle et des informations de signal audio contenues dans des trames suivantes du deuxième signal numérique,
- des deuxièmes moyens de conversion (15) pour convertir le deuxième signal numérique en un troisième signal numérique de manière à permettre la réalisation d'une correction d'erreurs dans le montage de reproduction sur le troisième signal numérique lu sur la piste,
- une source de signal (70) pour produire un signal auxiliaire,
- des moyens d'écriture (16) pour écrire le troisième signal numérique sur la piste du support d'enregistrement, et pour écrire le signal auxiliaire dans une piste auxiliaire du support d'enregistrement, le montage de reproduction comprenant
- des moyens de lecture (30) pour lire le troisième signal numérique sur la piste du support d'enregistrement, et pour lire le signal auxiliaire sur la piste auxiliaire du support d'enregistrement,
- des troisièmes moyens de conversion (32) pour corriger les erreurs dans le troisième signal numérique lu sur la piste, pour produire un drapeau d'erreurs s'ils ne sont pas capables de corriger une erreur, et pour reconvertir le troisième signal numérique en le deuxième signal numérique,
- des quatrièmes moyens de conversion (35, 36) pour reconvertir le deuxième signal numérique de manière à obtenir le signal audio numérique,
- des moyens de masquage (43) pour masquer des erreurs impossibles à corriger dans le signal audio numérique en réaction aux drapeaux d'erreurs produits par les moyens de correction d'erreurs,
- une borne de sortie (40) pour fournir le signal audio numérique, le montage d'enregistrement comprenant en outre des moyens de traitement de signaux (51, 71, 72) pour traiter plus avant le signal auxiliaire dans le montage d'enregistrement en réaction à et directement avant la fin d'un mode d'enregistrement, de manière à ajouter au moins un code de masquage à une partie terminale du signal auxiliaire qui doit être enregistré sur la piste auxiliaire, le montage de reproduction comprenant en outre des moyens de détection (75) pour détecter le au moins un code de masquage dans le signal auxiliaire lu sur la piste, pour produire un signal de commande de masquage pendant un deuxième intervalle de temps en réaction à le au moins un code de masquage détecté et pour fournir le signal de commande de masquage aux moyens de masquage de manière à masquer le signal numérique pendant ledit deuxième intervalle de temps, ledit deuxième intervalle de temps comprenant au moins le temps de reproduction de la partie terminale du signal numérique reproduit.

5. Système suivant la revendication 1 ou les revendications 1 et 2, les moyens de traitement de signaux comprenant des moyens de combinaison de signaux (72) pour ajouter en supplément au moins un code de masquage (cc) à la partie initiale du deuxième ou troisième signal numérique, le montage de reproduction comprenant en outre des moyens de détection (75) pour détecter le au moins un code de masquage dans le deuxième ou le troisième signal numérique lu sur la piste et pour produire le signal de commande de masquage pendant ledit premier intervalle de temps en réaction à le au moins un code de masquage détecté.

6. Système suivant la revendication 2 ou les revendications 1 et 2, les moyens de traitement de signaux comprenant des moyens de combinaison de signaux (72) pour ajouter en supplément au moins un code de masquage (cc) à la partie terminale du deuxième ou du troisième signal numérique, le montage de reproduction comprenant en outre des moyens de détection (75) pour détecter le au moins un code de masquage dans le deuxième ou le troisième signal numérique lu sur la piste et pour produire le signal de commande de masquage pendant ledit deuxième intervalle de temps en réaction à le au moins un code de masquage détecté.

7. Montage d'enregistrement pour enregistrer un signal audio numérique sur un support d'enregistrement réenregistrable (21), comprenant :
- une borne d'entrée (1) pour recevoir le signal audio numérique;
- des premiers moyens de conversion (14) pour convertir le signal audio numérique dans une étape de réduction de données en un deuxième signal numérique comprenant des informations de synchronisation, des informations d'attribution de bits, des informations de facteur d'échelle et des informations de signal audio contenues dans des trames suivantes du deuxième signal numérique;
- des deuxièmes moyens de conversion (15) pour convertir le deuxième signal numérique en un troisième signal numérique de manière à permettre la réalisation d'une correction d'errreurs dans le montage de reproduction au troisième signal numérique lu sur la piste;
- des moyens d'écriture (16) pour écrire le troisième signal numérique sur la piste du support d'enregistrement, le montage d'enregistrement comprenant en outre des moyens de traitement de signaux (51, 53, 54) pour traiter plus avant le signal numérique en réaction à la commutation du montage d'enregistrement en mode d'enregistrement, de manière à mutiler l'information incluse dans une partie initiale du troisième signal numérique qui doit être enregistré sur la piste, l'information incluse dans la partie initiale étant mutilée de telle manière que, durant la reproduction dans un montage de reproduction qui est pourvu des moyens de masquage pour masquer des erreurs impossibles à corriger présentes dans le troisième signal numérique durant la reproduction, l'information mutilée incluse dans la partie initiale du signal lu sur la piste, entraîne la production d'un signal de commande de masquage pendant un premier intervalle de temps qui est appliqué aux moyens de masquage de manière à masquer le signal numérique pendant ledit premier intervalle de temps, ledit premier intervalle de temps comprenant au moins le temps de reproduction de la partie initiale du signal numérique reproduit.

8. Montage d'enregistrement pour enregistrer le signal audio numérique sur une piste d'un support d'enregistrement réenregistrable (21), comprenant
- une borne d'entrée (1) pour recevoir le signal audio numérique,
- des premiers moyens de conversion (14) pour convertir le signal audio numérique dans une étape de réduction de données en un deuxième signal numérique comprenant des informations de synchronisation, des informations d'attribution de bits, des informations de facteur d'échelle et des informations de signal audio contenues dans des trames suivantes du deuxième signal numérique,
- des deuxièmes moyens de conversion (15) pour convertir le deuxième signal numérique en un troisième signal numérique de manière à permettre la réalisation d'une correction d'erreurs dans le montage de reproduction sur le troisième signal numérique lu sur la piste,
- des moyens d'écriture (16) pour écrire le troisième signal numérique sur la piste du support d'enregistrement, le montage d'enregistrement comprenant en outre des moyens de traitement de signaux (51, 53, 54) pour traiter plus avant le signal numérique en réaction à et directement avant la fin d'un mode d'enregistrement, de manière à mutiler l'information incluse dans une partie terminale du troisième signal numérique qui doit être enregistré sur la piste, l'information incluse dans la partie terminale étant mutilée de telle manière que, durant la reproduction dans un montage de reproduction qui est pourvu de moyens de masquage pour masquer des erreurs impossibles à corriger présentes dans le troisième signal numérique durant la reproduction, l'information mutilée incluse dans la partie terminale du signal lu sur la piste, entraîne la production d'un signal de commande de masquage pendant un deuxième intervalle de temps qui est appliqué aux moyens de masquage de manière à masquer le signal numérique pendant ledit deuxième intervalle de temps, ledit deuxième intervalle de temps comprenant au moins le temps de reproduction de la partie terminale du signal numérique reproduit.

9. Montage d'enregistrement pour enregistrer un signal audio numérique sur une piste d'un support d'enregistrement réenregistrable (21), comprenant
- une borne d'entrée (1) pour recevoir le signal audio numérique,
- des premiers moyens de conversion (14) pour convertir le signal audio numérique dans une étape de réduction de données en un deuxième signal numérique comprenant des informations de synchronisation, des informations d'attribution de bits, des informations de facteur d'échelle et des informations de signal audio contenues dans des trames suivantes du deuxième signal numérique.
- des deuxièmes moyens de conversion (15) pour convertir le deuxième signal numérique en un troisième signal numérique de manière à permettre la réalisation d'une correction d'erreurs dans le montage de reproduction sur le troisième signal numérique lu sur la piste,
- une source de signal (70) pour produire un signal auxiliaire,
- des moyens d'écriture (16) pour écrire le troisième signal numérique sur la piste du support d'enregistrement et pour écrire le signal auxiliaire sur une piste auxiliaire du support d'enregistrement,
le montage d'enregistrement comprenant en outre des moyens de traitement de signaux (51, 71, 72) pour traiter plus avant le signal auxiliaire dans le montage d'enregistrement en réaction à la commutation du montage d'enregistrement en mode d'enregistrement, de manière à ajouter au moins un code de masquage à une partie initiale du signal auxiliaire qui doit être enregistré sur la piste auxiliaire, de telle manière que, durant la reproduction dans un montage de reproduction qui est pourvu de moyens de détection (75) pour détecter le au moins un code de masquage dans le signal auxiliaire lu sur la piste, un signal de commande de masquage est produit pendant un premier intervalle de temps en réaction à le au moins un code de masquage détecté et pour fournir le signal de commande de masquage aux moyens de masquage de manière à masquer le signal numérique pendant ledit premier intervalle de temps, ledit premier intervalle de temps comprenant au moins le temps de reproduction de la partie initiale du signal numérique reproduit.

10. Montage d'enregistrement pour enregistrer un signal audio numérique sur un support d'enregistrement réenregistrable (21), comprenant
- une borne d'entrée (1) pour recevoir le signal audio numérique,
- des premiers moyens de conversion (14) pour convertir le signal audio numérique dans une étape de réduction de données en un deuxième signal numérique comprenant des informations de synchronisation, des informations d'attribution de bits, des informations de facteur d'échelle et des informations de signal audio contenues dans des trames suivantes du deuxième signal numérique,
- des deuxièmes moyens de conversion (15) pour convertir le deuxième signal numérique en un troisième signal numérique de manière à permettre la réalisation d'une correction d'erreurs dans le montage de reproduction sur le troisième signal numérique lu sur la piste,
- une source de signal (70) pour produire un signal auxiliaire,
- des moyens d'écriture (16) pour écrire le troisième signal numérique sur la piste du support d'enregistrement et pour écrire le signal auxiliaire sur une piste auxiliaire du support d'enregistrement,
le montage d'enregistrement comprenant en outre des moyens de traitement de signaux (51, 71, 72) pour traiter plus avant le signal auxiliaire en réaction à et directement avant la fin d'un mode d'enregistrement, de manière à ajouter au moins un code de masquage à une partie terminale du signal auxiliaire qui est enregistré sur la piste auxiliaire, de manière à ce que, durant la reproduction dans un montage de reproduction comprenant des moyens de détection (75) pour détecter le au moins un code de masquage dans le signal auxiliaire lu sur la piste, pour produire un signal de commande de masquage pendant un deuxième intervalle de temps en réaction à le au moins un code de masquage détecté et pour fournir le signal de commande de masquage aux moyens de masquage de manière à masquer le signal numérique pendant ledit deuxième intervalle de temps, ledit deuxième intervalle de temps comprenant au moins le temps de reproduction de la partie terminale du signal numérique reproduit.

11. Montage d'enregistrement suivant la revendication 7 ou 8, les moyens de traitement de signaux comprenant des moyens de brouillage (50) pour brouiller au moins une partie de la partie initiale du troisième signal numérique.

12. Montage d'enregistrement suivant la revendication 11, lorsqu'elle dépend de la revendication 8, les moyens de brouillage étant en outre adaptés pour brouiller au moins une partie de la partie terminale du troisième signal numérique.

13. Montage d'enregistrement suivant la revendication 11, les deuxièmes moyens de conversion (15) étant adaptés pour ajouter des informations de parité au deuxième signal numérique, les moyens de traitement de signaux étant adaptés pour mutiler les informations de parité contenues dans la partie initiale du troisième signal numérique.

14. Montage d'enregistrement suivant la revendication 13, les moyens de traitement de signaux étant en outre adaptés pour mutiler les informations de parité contenues dans la partie terminale du troisième signal numérique.

15. Montage d'enregistrement suivant la revendication 7, 8, 9 ou 10, les moyens de traitement de signaux comprenant des moyens de combinaison de signaux (72) pour ajouter en plus des codes de masquage au signal auxiliaire ou au deuxième ou troisième signal numérique.

16. Support d'enregistrement réenregistrable obtenu avec le montage d'enregistrement suivant la revendication 15, lorsqu'elle dépend de la revendication 9 ou 10, présentant un signal numérique et un signal auxiliaire enregistré sur lui sur des pistes dudit support d'enregistrement, un code de masquage étant ajouté à une partie initiale ou à une partie terminale du signal auxiliaire, tel qu'enregistré sur la piste.

17. Montage de reproduction pour reproduire un signal audio numérique depuis un support d'enregistrement réenregistrable (21), comprenant
- des moyens de lecture (30) pour lire un signal numérique sur la piste du support d'enregistrement, des premiers moyens de conversion (32) pour corriger des erreurs dans le signal numérique lu sur la piste, pour produire un drapeau d'erreurs s'ils ne sont pas capables de corriger une erreur, et pour reconvertir le signal numérique en un deuxième signal numérique,
- des deuxièmes moyens de conversion (35, 36) pour reconvertir le deuxième signal numérique de manière à obtenir le signal audio numérique,
- des moyens de masquage (43) pour masquer des erreurs impossibles à corriger dans le signal audio numérique en réaction à des drapeaux d'erreurs produits par les premiers moyens de conversion,
- une borne de sortie (40) pour fournir le signal audio numérique,
le montage de reproduction comprenant en outre des moyens de détection (75) pour détecter un code de masquage présent dans le signal lu sur la liste, pour produire un signal de commande de masquage en réaction au code de masquage détecté et pour fournir le signal de commande de masquage aux moyens de masquage, les moyens de masquage étant également adaptés pour masquer le signal numérique pendant un intervalle de temps spécifique en réaction audit signal de commande de masquage, afin de masquer une distorsion audible qui sans cela, peut apparaître en réaction à une reproduction sur une limite entre un ancien et un nouvel enregistrement du signal numérique sur le support d'enregistrement.

18. Montage de reproduction pour reproduire un signal audio numérique et un signal auxiliaire d'un support d'enregistrement réenregistrable (21), comprenant
- des moyens de lecture (30) pour lire le signal numérique sur la piste du support d'enregistrement et pour lire le signal auxiliaire sur la piste auxiliaire sur ledit support d'enregistrement,
- des premiers moyens de conversion (32) pour corriger des erreurs dans le signal numérique lu sur la piste, pour produire un drapeau d'erreurs s'ils ne sont pas capables de corriger une erreur, et pour reconvertir le signal numérique en un deuxième signal numérique,
- des deuxièmes moyens de conversion (35, 36) pour reconvertir le deuxième signal numérique de manière à obtenir le signal audio numérique,
- des moyens de masquage (43) pour masquer des erreurs impossibles à corriger dans le signal audio numérique en réaction à des drapeaux d'erreurs produits par les premiers moyens de conversion,
- une borne de sortie (40) pour fournir le signal audio numérique,
le montage de reproduction comprenant en outre des moyens de détection pour détecter un code de masquage présent dans le signal auxiliaire lu sur la piste auxiliaire, pour produire un signal de commande de masquage pendant un intervalle de temps spécifique en réaction au code de masquage détecté et pour fournir le signal de commande de masquage aux moyens de masquage de manière à masquer le signal audio numérique pendant ledit intervalle de temps spécifique.
